# EUROPEAN PATENT APPLICATION

(11) **EP 3 806 229 A1**
(43) Date of publication of application: **14.04.2021**
(21) Application number: 20208850.6
(22) Date of filing: 12.06.2017
(51) Int. Cl.: H01M 10/54, H01M 10/0525

(54) **METHOD FOR RECYCLING LITHIUM-ION BATTERY**

(30) Priority: 07.07.2016 US 201662359703 P
(62) Divisional of application: 17823499.3
(71) Applicant: GRST International Limited, Shatin, New Territories Hong Kong (HK)
(72) Inventor: HO, Kam Piu, Hong Kong (HK); WANG, Ranshi, Hong Kong (HK); SHEN, Peihua, Guangzhou (CN)
(74) Representative: Kurig, Thomas

(57) **Abstract**

Provided herein is a method for recycling lithium-ion batteries, comprising isolating a mixture of anode and cathode materials from waste lithium-ion batteries. The separated electrode materials can easily be collected with high recovery rate, providing a rapid, efficient and low-cost method for recycling electrode materials from waste lithium-ion batteries.

## Description

### FIELD OF THE INVENTION

This invention relates to methods of recycling lithium-ion batteries.

### BACKGROUND OF THE INVENTION

In the past decades, lithium-ion batteries (LIBs) have been widely utilized in various applications such as consumer electronics because of their superior energy density, long life type and discharging capability. LIBs generally include an anode, an electrolyte, and a cathode that contains lithium in the form of a lithium-transition metal oxide.

In recent years, LIBs are starting to be used in significant quantities for automotive propulsion because these batteries can provide many years of reliable service and are expected to last for about 10 years under normal driving conditions. LIBs may subsequently be used for utility energy storage and are eventually considered to have reached the end of their useful life.

Environmental issues of spent LIBs have attracted widespread concern in the public. If usable materials can be recovered from used batteries, less raw materials will be needed to be extracted from the limited supplies in the ground. In addition, significant negative environmental impacts caused by mining and processing ores (e.g., SOₓ emissions from smelting of sulfide ores, such as those that yield copper, nickel, and cobalt) are avoided if the used LIBs can be recycled.

Currently, methods for recycling waste LIBs can be divided into two broad types: leaching method, and combination method of calcination and leaching. Generally, leaching method includes steps of crushing or chopping battery, leaching with acid, separating the leached materials by precipitation, complexation and/or extraction. However, leaching involves complex leachate composition and multiple separation steps creating large amounts of secondary waste.

Combination method of calcination and leaching includes steps of crushing or chopping battery, calcinating, leaching with acid, separating the leached materials, etc. However, this method has the additional disadvantage of high energy consumption caused by the heat treating process. Besides, recovery rate of the electrode materials is low since some components of the electrode materials are burned into carbon dioxide and other harmful substances.

Different attempts have been made to solve the problems and improve the performance of the recycling process. CN Patent Publication No. 104577246 A describes a method of recycling cathode and anode materials from LIBs. However, the method is time-consuming and labor-intensive since the recycling method requires removal of battery shell.

CN Patent Publication No. 103449395 A discloses a method for recycling a cathode material from lithium iron phosphate batteries. However, the method requires a step of meticulously disassembling lithium iron phosphate batteries to obtain undamaged cathode plates and is limited to lithium iron phosphate batteries.

CN Patent No. 101318712 B discloses a method for recovering cobalt from LIBs. However, the recycled content is only limited to LiCoO₂, and not applicable to other cathode materials.

CN Patent Publication No. 104409792 A discloses a method for recovering cobalt from LIBs. The method comprises a step of separating materials of different densities based on a sink-float method where a heavier fraction sinks to the bottom, and a lighter fraction floats. This separation system although conceptually very simple suffers from a number of drawbacks. When the solid material is wetted with water or an aqueous liquor, some of the light and heavy particles flocculate to form aggregates. It is, therefore, a part of the suspended solid particles containing LiCoO₂ and carbon powder will settle and be removed when separating the heavier fraction, thereby complicating the separation process. In addition, the method is time consuming and not economical since the lighter fraction, heavier fraction, and suspended solid particles must be removed sequentially. Furthermore, the recycled content is also limited to LiCoO₂, and not applicable to other cathode materials.

In view of the above, there is always a need to develop a method for recycling LIBs with high recovery, high efficiency and low cost under mild conditions. In particular, a non-polluting method for recycling LIBs is needed to reduce air and water pollution formed in the recycling process.

### SUMMARY OF THE INVENTION

The aforementioned needs are met by various aspects and embodiments disclosed herein. In one aspect, provided herein is a method for recycling lithium-ion batteries, comprising the steps of:
a) discharging the lithium-ion batteries;
b) chopping the lithium-ion batteries into pieces to provide a mixture of a structural part, a first conductive metal part coated with a cathode layer, and a second conductive metal part coated with an anode layer;
c) immersing the pieces of the chopped lithium-ion batteries into a polar solvent to form a heterogeneous mixture;
d) processing the heterogeneous mixture with mechanical agitation for a time period from about 30 minutes to about 5 hours to dissolve a binder material in the cathode and anode layers;
e) screening the processed heterogeneous mixture to separate the structural part, first conductive metal part, and second conductive metal part from finer electrode materials comprising cathode and anode materials to provide a suspension comprised of the polar solvent and the finer electrode materials; and
f) isolating the finer electrode materials in the suspension from the polar solvent;
wherein the polar solvent is water, alcohol, ketone or a combination thereof;
wherein the cathode material is a lithium transition metal oxide selected from the group consisting of LiCoO₂, LiNiO₂, LiNiₓMn_{y}O₂, LiNiₓCo_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, LiFePO₄, and combinations thereof; wherein each x is independently from 0.3 to 0.8; each y is independently from 0.1 to 0.45; and each z is independently from 0 to 0.2; and
wherein the binder material in each of the cathode and anode layers is independently a water-based binder material, or a mixture of water-based and organic-based binder materials.

In some embodiments, the lithium-ion batteries are chopped by a water jet cutting machine or a device with teeth or blades. In certain embodiments, the pieces of the chopped lithium-ion batteries have an average length from about 1.27 cm to about 10.16 cm. In other embodiments, the pieces of the chopped lithium-ion batteries have an average length of about 0.635 cm or less.

In certain embodiments, each of the first and second conductive metal parts is independently selected from the group consisting of an aluminum thin plate, a copper thin plate, a gold thin plate, a silver thin plate, and a platinum thin plate.

In some embodiments, the polar solvent is water. In other embodiments, the polar solvent is a mixture of water and an alcohol. In further embodiments, the alcohol is selected from methanol, ethanol, isopropanol, n-propanol, t-butanol, or a combination thereof. In still further embodiments, a weight ratio of water to the alcohol is from about 5:95 to about 95:5.

In certain embodiments, the polar solvent is a mixture of water and ketone. In further embodiments, the ketone is selected from acetone, diethyl ketone, methyl ethyl ketone, methyl isobutyl ketone and methyl propyl ketone, or a combination thereof. In still further embodiments, a weight ratio of water to the ketone is from about 5:95 to about 95:5.

In some embodiments, the polar solvent is a buffer solution comprising a salt selected from the group consisting of lithium carbonate, lithium bicarbonate, lithium phosphate, sodium carbonate, sodium bicarbonate, sodium phosphate, potassium carbonate, potassium bicarbonate, potassium phosphate, ammonium carbonate, ammonium bicarbonate, ammonium phosphate, and combinations thereof. In certain embodiments, the buffer solution has a pH from about 6 to about 8.

In certain embodiments, the mechanical agitating step is performed by stirring, shaking, ultrasonication, vortexing, or a combination thereof. In some embodiments, the mechanical agitation step is performed by a dispersion blade mixer, a stirring mixer, a screw mixer, a conical screw mixer, a planetary stirring mixer, an air jet mixer, a high shearing mixer, an ultrasonic bath, an ultrasonic probe or a combination thereof.

In some embodiments, the heterogeneous mixture in step d) is heated at a temperature from about 35 °C to about 100 °C. In some embodiments, the heterogeneous mixture in step d) is heated at a temperature from about 55 °C to about 75 °C.

In some embodiments, the water-based binder material is selected from the group consisting of styrene-butadiene rubber, acrylated styrene-butadiene rubber, acrylonitrile-butadiene rubber, nitrile butadiene rubber, acrylonitrile-styrene-butadiene copolymer, acryl rubber, butyl rubber, fluorine rubber, polytetrafluoroethylene, polyethylene, polypropylene, ethylene/propylene copolymers, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resins, phenolic resins, epoxy resins, carboxymethyl cellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, polymethacrylic acid, polymethacrylate, polyacrylamide, polyurethane, fluorinated polymer, chlorinated polymer, a salt of alginic acid, and combinations thereof.

In certain embodiments, the organic-based binder material is selected from the group consisting of polytetrafluoroethylene (PTFE), perfluoroalkoxy polymer (PFA), polyvinylidene fluoride (PVDF), copolymer of tetrafluoroethylene (TFE) and hexafluoropropylene (HFP), fluorinated ethylene-propylene (FEP) copolymer, terpolymer of tetrafluoroethylene, hexafluoropropylene and vinylidene fluoride, and combinations thereof.

In some embodiments, the finer electrode materials further comprise a conductive agent.

In certain embodiments, the cathode material is LiNiO₂, LiNiₓMn_{y}O₂, LiNiₓCo_{y}O₂, Li_{1+z}NiₓMn_{y}Co_{1-x-y}O₂, LiNiₓCo_{y}Al_{z}O₂, and combinations thereof; wherein each x is independently from 0.5 to 0.8; each y is independently from 0.1 to 0.4; and each z is independently from 0 to 0.2.

In some embodiments, the anode material is a carbonaceous material.

In certain embodiments, the finer electrode materials are screened by passing through a sieve having a mesh width between 2 mm and 4 mm. In certain embodiments, the finer electrode materials are screened by passing through a sieve having a mesh width between 0.5 mm and 1.0 mm.

In some embodiments, isolation of the finer electrode materials is performed by filtration, decanting, settling, centrifugation, or a combination thereof.

In certain embodiments, the recovery of finer electrode material is at least 90%, or at least 95%. In some embodiments, the percentage of impurity in the recovered finer electrode material is less than 2%, less than 1%, less than 0.5%, less than 0.1%, or less than 0.05%.

### BRIEF DESCRIPTION OF THE DRAWINGS

Figure 1 depicts an embodiment of the method disclosed herein.
Figure 2 is a schematic view showing an embodiment of a high shearing mixer.

### DETAILED DESCRIPTION OF THE INVENTION

### General Definitions

The term "mechanical agitation" refers to the application of kinetic energy to a solid mixture in contact with a liquid in order to facilitate wetting of the solid mixture within the liquid. Some non-limiting examples of the mechanical agitation include mixing, stirring, shaking, ultrasonication, vortexing, and combinations thereof.

The term "water jet cutting machine" or "water jet cutter" refers to a tool capable of cutting a wide variety of materials using a very high-pressure jet of water.

The term "heterogeneous mixture" refers to a mixture of two or more phases.

The term "electrode" refers to a "cathode" or an "anode."

The term "positive electrode" is used interchangeably with cathode. Likewise, the term "negative electrode" is used interchangeably with anode.

The term "binder material" refers to a chemical or a substance used to hold an electrode material and/or a conductive agent in place and adhere them onto a conductive metal part to form an electrode. In some embodiments, the electrode does not comprise any conductive agent.

The term "water-based binder material" refers to a water-soluble or water-dispersible binder polymer. Some non-limiting examples of the water-based binder material include styrene-butadiene rubber, acrylated styrene-butadiene rubber, acrylonitrile-butadiene rubber, acryl rubber, butyl rubber, fluorine rubber, polytetrafluoroethylene, polyethylene, polypropylene, ethylene/propylene copolymers, polybutadiene, polyethylene oxide, polyvinylpyrrolidone, polyepichlorohydrin, polyphosphazene, polyacrylonitrile, polystyrene, ethylene/propylene/diene copolymers, polyvinylpyridine, chlorosulfonated polyethylene, latex, polyester resins, acrylic resins, phenolic resins, epoxy resins, polyvinyl alcohol, carboxymethyl cellulose, hydroxypropyl cellulose, and combinations thereof.

The term "organic-based binder material" refers to a binder soluble or dispersible in an organic solvent, in particular, N-methyl-2-pyrrolidone (NMP). Some non-limiting examples of the organic-based binder material include polytetrafluoroethylene (PTFE), perfluoroalkoxy polymer (PFA), polyvinylidene fluoride (PVDF), copolymer of tetrafluoroethylene (TFE) and hexafluoropropylene (HFP), fluorinated ethylene-propylene (FEP) copolymer, terpolymer of tetrafluoroethylene, hexafluoropropylene and vinylidene fluoride, and combinations thereof.

The term "conductive metal part" refers to a support for coating an electrode material and/or a conductive agent. Some non-limiting examples of the conductive metal part include an aluminum thin plate, a copper thin plate, a gold thin plate, a silver thin plate, and a platinum thin plate.

The term "conductive agent" refers to a material which is chemically inactive and has good electrical conductivity. Therefore, the conductive agent is often mixed with an electrode active material at the time of forming an electrode to improve electrical conductivity of the electrode. In some embodiments, the conductive agent is a carbonaceous material.

The term "carbonaceous material" refers to any material that includes at least 50 mole % carbon. Some non-limiting examples of the carbonaceous material include soft carbon, hard carbon, coke, graphite, carbon nanotubes, carbon fibers, graphite fibers, carbon nanofibers, graphite nanofibers, carbon black, activated carbon, and combinations thereof.

The term "ultrasonicator" refers to an equipment that can apply ultrasound energy to agitate particles in a sample. Any ultrasonicator that can disperse the heterogeneous mixture can be used herein. Some non-limiting examples of the ultrasonicator include an ultrasonic bath and a probe-type ultrasonicator.

The term "ultrasonic bath" refers to an apparatus through which the ultrasonic energy is transmitted via the container's wall of the ultrasonic bath into the sample liquid.

The term "probe-type ultrasonicator" refers to an ultrasonic probe immersed into a medium for direct ultrasonication. The term "direct ultrasonication" means that the ultrasound is directly coupled into the processing liquid.

The term "dispersion blade mixer" refers to a mixer which comprises a vessel and a rotatable cutting member having at least one blade. The blade has at least one sharp edge. In some embodiments, the rotatable cutting member has a substantially vertical axis of rotation. The rotational speed can be expressed in unit of rotations per minute (rpm) which refers to the number of rotations that a rotating body completes in one minute.

The term "stirring mixer" refers to a mixer which comprises a vessel and a rotatable member having at least one arm. In some embodiments, the arm is rod-shaped, paddle-shaped, or plate-shaped.

The term "screw mixer" refers to a mixer which comprises a vessel and a vertical mixing screw arranged at the centre of the vessel. The vessel can be cylindrical, spherical or conical.

The term "conical screw mixer" refers to a mixer which comprises a vessel tapering toward the bottom region and at least one rotationally driven mixing screw moving parallel to and along the inner wall of the vessel.

The term "planetary mixer" refers to an equipment that can be used to mix or blend different materials for producing a homogeneous mixture, which consists of a single or double blade with a high speed dispersion blade.

The term "air jet mixer" refers to a mixer which comprises a container having perforated walls and a plurality of nozzles from which compressed gas or liquid is ejected toward the material in the container.

The term "impact crusher" refers to an apparatus which comprises a housing, a rotor assembly and a plurality of anvils positioned around the rotor assembly and configured to break apart the material. The rotor assembly uses centrifugal forces to throw the material at high speeds and, upon contact with the wall of the housing or anvils, the material breaks apart. The process is repeatedly until the crushed material is discharged from the outlet. Some non-limiting examples of impact crusher include horizontal impact crusher and vertical impact crusher.

The term "room temperature" refers to a temperature from about 18 °C to about 30 °C, e.g., 18, 19, 20, 21, 22, 23, 24, 25, 26, 27, 28, 29, or 30 °C.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, R^{L}, and an upper limit, R^{U}, is disclosed, any number falling within the range is specifically disclosed. In particular, the following numbers within the range are specifically disclosed: R=R^{L}+k∗(R^{U}-R^{L}), wherein k is a variable ranging from 1 percent to 100 percent with a 1 percent increment, *i.e.,* k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Provided herein is a method for recycling lithium-ion batteries, comprising the steps of:
a) discharging the lithium-ion batteries;
b) chopping the lithium-ion batteries into pieces to provide a mixture of a structural part, a first conductive metal part coated with a cathode layer, and a second conductive metal part coated with an anode layer;
c) immersing the pieces of the chopped lithium-ion batteries into a polar solvent to form a heterogeneous mixture;
d) processing the heterogeneous mixture with mechanical agitation for a time period from about 30 minutes to about 5 hours to dissolve a binder material in the cathode and anode layers;
e) screening the processed heterogeneous mixture to separate the structural part, first conductive metal part, and second conductive metal part from finer electrode materials comprising cathode and anode materials to provide a suspension comprised of the polar solvent and the finer electrode materials; and
f) isolating the finer electrode materials in the suspension from the polar solvent;
wherein the polar solvent is water, alcohol, ketone or a combination thereof;
wherein the cathode material is a lithium transition metal oxide selected from the group consisting of LiCoO₂, LiNiO₂, LiNiₓMn_{y}O₂, LiNiₓCo_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, LiFePO₄, and combinations thereof; wherein each x is independently from 0.3 to 0.8; each y is independently from 0.1 to 0.45; and each z is independently from 0 to 0.2; and
wherein the binder material in each of the cathode and anode layers is independently a water-based binder material, or a mixture of water-based and organic-based binder materials.

The present invention is intended to overcome the disadvantages of conventional recovery methods, to provide methods for recycling lithium-ion batteries having higher efficiency, low cost, and ease of handling. According to the present invention, a method for recycling lithium-ion batteries in a simple and easy manner with high efficiency can be provided.

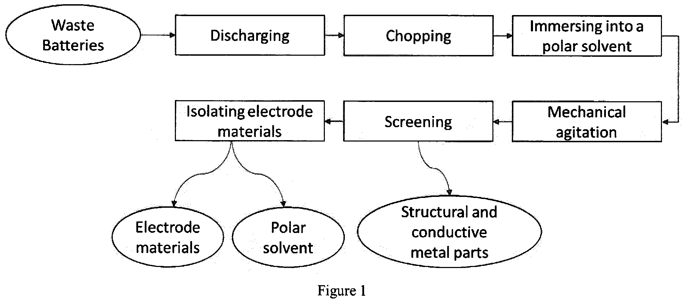

Figure 1 is a flowchart illustrating an embodiment of a recycling process of used lithium-ion batteries. The present invention simplifies the recycling process of spent lithium-ion batteries and reduces the operating cost.

Before recycling, lithium-ion batteries are discharged because charge may remain stored in the batteries. In some embodiments, the charge remaining stored in the batteries is discharged by soaking the batteries in an aqueous solution containing a conducting salt. In certain embodiments, the aqueous solution is neutral or alkaline. The discharge provides an advantage capable of ensuring the safety.

In some embodiments, the conducting salt is or comprises an alkali metal bicarbonate, such as sodium bicarbonate (NaHCO₃) and potassium bicarbonate (KHCO₃), an alkali metal carbonate, such as sodium carbonate (Na₂CO₃) and potassium carbonate (K₂CO₃), an alkaline earth metal carbonates, such as calcium carbonate (CaCO₃) and magnesium carbonate (MgCO₃), an alkali metal hydroxide, such as sodium hydroxide (NaOH) and potassium hydroxide (KOH), an alkaline earth metal hydroxides, such as calcium hydroxide (Ca(OH)₂), magnesium hydroxide (Mg(OH)₂), or an alkali metal or alkaline earth metal halides, such as sodium chloride (NaCl) and calcium chloride (CaCl₂), or a combination thereof.

Electrical resistance of the aqueous solution can be regulated. A too small resistance of the solution leads to a risk of discharging too rapidly. On the other hand, a too large resistance will make the discharging time too long. In certain embodiments, the solution resistance can fall within a range from about 0.1 Ω to about 10 kΩ by regulating the concentration of the aqueous solution.

In certain embodiments, a total molar concentration of the conducting salt in the aqueous solution is from about 1 mol/L to about 5 mol/L, from about 1 mol/L to about 4 mol/L, from about 1 mol/L to about 3 mol/L, from about 2 mol/L to about 5 mol/L, from about 2 mol/L to about 4 mol/L, from about 2 mol/L to about 3 mol/L, or from about 4 mol/L to about 5 mol/L. Within this range, safe and controlled discharge of the batteries can be achieved. In other embodiments, the aqueous solution for discharging does not comprise any conducting salt.

In some embodiments, the batteries can be punctured before soaking in the aqueous solution. Punctured hole can be formed by impact puncturing, saw blade cutting, or any other means of mechanically piercing the battery pack shell and housing.

The discharged batteries are then chopped into pieces to provide a mixture of a structural part, a first conductive metal part coated with a cathode layer, and a second conductive metal part coated with an anode layer.

In certain embodiments, the lithium-ion batteries are chopped by a water jet cutting machine or a device with teeth or blades. The operation of the cutting machine may be monitored by a computer and the speed of the cutting machine may thereby be automatically adjusted to ensure that the resulting battery pieces are of the desired size. In some embodiments, the lithium-ion batteries are disassembled to isolate the cathode electrode and anode electrode. In certain embodiments, the lithium-ion batteries are subjected to heat treatment at a temperature ranging from about 100 °C to about 600 °C before chopping. In some embodiments, the lithium-ion batteries do not undergo a heat treatment before chopping.

A cathode for a lithium secondary battery may have a structure in which a cathode layer is formed on a first conductive metal part. An anode for a lithium secondary battery may have a structure in which an anode layer is formed on a second conductive metal part. The conductive metal part serves as a current collector. Any metal having excellent electron conductivity as to operate as the current collector may be used herein.

In some embodiments, each of the first and second conductive metal parts is independently selected from the group consisting of an aluminum thin plate, a copper thin plate, a gold thin plate, a silver thin plate, and a platinum thin plate. In certain embodiments, the first conductive metal part is an aluminum thin plate. In some embodiments, the second conductive metal part is a copper thin plate.

Each battery is cut by the cutting machine into smaller pieces. In certain embodiments, the pieces of the chopped lithium-ion batteries have an average length from about 1.27 cm to about 10.16 cm. In some embodiments, the pieces of the chopped lithium-ion batteries have an average length of about 0.635 cm or less.

The method disclosed herein does not involve a dismantling step. Therefore, a large quantity of work can be processed without dismantlement.

One of the biggest challenges to recycling is that the recycling process itself creates even more toxic chemicals due to the use of many toxic and volatile organic solvents, contributing to pollution. Consequently, it is highly desirable to develop environmentally benign recycling processes that can be conducted in aqueous media or water. Furthermore, using aqueous media or water as a solvent offers many advantages, such as simple operation.

The recycling method disclosed herein is non-toxic and environmentally friendly. The pieces of the chopped lithium-ion batteries are then immersed into a polar solvent to form a heterogeneous mixture. In some embodiments, the polar solvent means a solution which contains water and which may contain an alcohol or the like in addition to water. In certain embodiments, the amount of water is at least 1%, at least 2%, at least 3%, at least 4%, at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, or at least 95% to the total amount of water and solvents other than water. In some embodiments, the amount of water is at most 1%, at most 2%, at most 3%, at most 4%, at most 5%, at most 10%, at most 15%, at most 20%, at most 25%, at most 30%, at most 35%, at most 40%, at most 45%, at most 50%, at most 55%, at most 60%, at most 65%, at most 70%, at most 75%, at most 80%, at most 85%, at most 90%, or at most 95% to the total amount of water and solvents other than water. On the other hand, the upper limit is such that the solvent consists solely of water, that is, the proportion of water is 100 vol.%.

In certain embodiments, a weight ratio of water to the alcohol is from about 99:1 to about 1:99, from about 95:5 to about 5:95, from about 10:1 to about 1:10, from about 10:1 to about 1:1, from about 8:1 to about 3:1, from about 5:1 to about 3:1, from about 4:1 to about 2:1, or from about 3:1 to about 1:3. In some embodiments, the weight ratio of water to the alcohol is about 1:10, 1:9, 1:8, 1:7, 1:6, 1:5, 1:4, 1:3, 1:2, 1:1, 2:1, 3:1, 4:1, 5:1, 6:1, 7:1, 8:1, 9:1, or 10:1.

Some non-limiting examples of the alcohol include C₁-C₄ alcohols, methanol, ethanol, isopropanol, n-propanol, t-butanol, and combinations thereof.

Some non-limiting examples of the solvents other than water include lower aliphatic ketones, such as acetone, dimethyl ketone, methyl ethyl ketone, etc.; other solvents such as ethyl acetate, isopropyl acetate, propyl acetate; and combinations thereof. In some embodiments, the volatile solvent component is methyl ethyl ketone, ethanol, ethyl acetate, or a combination thereof.

In some embodiments, the polar solvent is a mixture of water and ketone. In further embodiments, the ketone is selected from acetone, diethyl ketone, methyl ethyl ketone, methyl isobutyl ketone and methyl propyl ketone, or a combination thereof. In still further embodiments, a weight ratio of water to the ketone is from about 5:95 to about 95:5. In certain embodiments, the weight ratio of water to the ketone is about 1:10, 1:9, 1:8, 1:7, 1:6, 1:5, 1:4, 1:3, 1:2, 1:1, 2:1, 3:1, 4:1, 5:1, 6:1, 7:1, 8:1, 9:1, or 10:1.

In certain embodiments, the polar solvent used for immersing the pieces of the chopped lithium-ion batteries is water. Some non-limiting examples of water include tap water, bottled water, purified water, pure water, distilled water, deionized water, D₂O, or a combination thereof. In some embodiments, the polar solvent is deionized water. In certain embodiments, the pH of water is from about 6.5 to about 7.5. In some embodiments, the pH of water is about 7.

In certain embodiments, the polar solvent is not an organic solvent or a mixture of water and organic solvent. In some embodiments, the polar solvent is not an alcohol, acetone, or ether. In certain embodiments, the polar solvent is not N-methyl-2-pyrrolidone, dimethylformamide, dimethylacetamide, dimethyl sulfoxide, tetrahydrofuran, formic acid, ethanoic acid, oxalic acid, or citric acid. In some embodiments, the polar solvent does not contain an acid or a base.

In some embodiments, the polar solvent is a buffer solution comprising a salt selected from the group consisting of lithium carbonate, lithium bicarbonate, lithium phosphate, sodium carbonate, sodium bicarbonate, sodium phosphate, potassium carbonate, potassium bicarbonate, potassium phosphate, ammonium carbonate, ammonium bicarbonate, ammonium phosphate, and combinations thereof. In certain embodiments, the buffer solution has a pH from about 6 to about 8. In some embodiments, the polar solvent is not a buffer solution.

In certain embodiments, the heterogeneous mixture is processed to assist dissolution of binder material under mechanical agitation. Any suitable method may be used to agitate the heterogeneous mixture. Some non-limiting examples of suitable agitation may be accomplished by mechanical stirring, magnetic stirring, shaking, ultrasonication, vortexing, and combinations thereof.

In some embodiments, the mechanical agitation is performed by an ultrasonicator. Any ultrasonicator that can apply ultrasound energy to agitate particles in a sample can be used herein. In some embodiments, the ultrasonicator is a probe-type ultrasonicator or an ultrasonic bath.

In certain embodiments, the ultrasonicator is operated at a power density from about 10 W/L to about 100 W/L, from about 40 W/L to about 60 W/L, from about 20 W/L to about 100 W/L, from about 30 W/L to about 100 W/L, from about 40 W/L to about 80 W/L, from about 40 W/L to about 70 W/L, from about 40 W/L to about 50 W/L, or from about 50 W/L to about 60 W/L.

An advantage of ultrasonic agitation is that it reduces the processing time. However, during scale-up, problem is mainly concerned with poor transmission of the ultrasound. The amplitude of ultrasonication should be increased when working with large amount of samples. This is because as the amount of sample increases so does the resistance of the sample to the movement of the ultrasound wave. Therefore, a high amplitude (i.e., high intensity) is needed so as to obtain the necessary mechanical vibration.

However, the high amplitude of ultrasonication can lead to rapid deterioration of ultrasonic transducer, resulting in poor transmission of the ultrasound through the liquid media. This problem becomes more severe when a larger container is used. On the other hand, the investment costs of ultrasonic equipment for large-scale operations are high and the energy costs are also higher than in mechanically-stirred processing.

In some embodiments, the heterogeneous mixture can be mechanically stirred. In certain embodiments, the heterogeneous mixture can be ultrasonically agitated. In some embodiments, the mechanical stirring is performed by a stirrer in a vessel or a tank. Some non-limiting examples of the stirrer include a dispersion blade mixer, a stirring mixer, a planetary stirring mixer, a screw mixer, a conical screw mixer and a high shearing mixer. In certain embodiments, the heterogeneous mixture can be mechanically agitated by an air jet mixer. In some embodiments, the agitation device is not an ultrasonicator, a dispersion blade mixer, a stirring mixer, a planetary stirring mixer, a screw mixer, a conical screw mixer, a high shearing mixer, or an air jet mixer.

The main advantage of using mechanical stirring is that it allows reliable scale-up from lab scale to pilot or large scale. Other advantages of mechanical stirring are the simple mechanical construction, simple maintenance and lower operating costs, particularly reduced energy and cooling water costs, as the use of mechanical stirring would diminish the cooling water requirements.

In some embodiments, the mechanical stirring can be performed for a time period sufficient for detaching electrode materials from conductive metal parts. In certain embodiments, the time period is from about 1 hour to about 10 hours, from about 1 hour to about 8 hours, from about 1 hour to about 6 hours, from about 1 hour to about 4 hours, from about 1 hour to about 3 hours, from about 1 hour to about 2 hours, from about 2 hours to about 6 hours, from about 15 minutes to about 2 hours, or from about 30 minutes to about 2 hours. In some embodiments, the time period is at least about 30 minutes, at least about 1 hour, at least about 2 hours, at least about 3 hours, at least about 4 hours, at least about 5 hours, at least about 6 hours, at least about 7 hours, at least about 8 hours, at least about 9 hours, or at least about 10 hours. In certain embodiments, the time period is less than about 10 hours, less than about 9 hours, less than about 8 hours, less than about 7 hours, less than about 6 hours, less than about 5 hours, less than about 4 hours, less than about 3 hours, less than about 2 hours, or less than about 1 hour.

Generally, when the mechanical stirring is performed by a nonblade-shaped stirrer such as stirring mixer and the stirring time is less than 30 minutes, the dissolution amount of binder material is relatively small and large amount of electrode materials still adhere to the conductive metal parts. This eventually decreases the amount of electrode materials recovered. This is particularly true when scaling up the recovery of LIBs.

In some embodiments, the heterogeneous mixture is soaked in a polar solvent for a time period from about 1 hour to about 5 hours before mechanically stirred. In other embodiments, the heterogeneous mixture is not soaked before mechanically stirred. It is found that soaking alone in polar solvent such as water is not sufficient to remove the electrode layers from the conductive metal parts and soaking prior to mechanical stirring does not increase the recovery.

Mechanical stirring is crucial to the removal of the electrode layers from the conductive metal parts. Shearing force produced in the mixer is required to separate the electrode layers from the conductive metal parts. Separation of the electrode layers from the conductive metal parts is also assisted by collision between fragments of battery.

In some embodiments, the stirrer is a dispersion blade mixer. In certain embodiments, the dispersion blade mixer comprises at least one sharp-edged blade arranged at the centre of the mixer. In some embodiments, the rotational speed of the dispersion blade is from about 1,000 rpm to about 50,000 rpm, from about 5,000 rpm to about 50,000 rpm, from about 10,000 rpm to about 50,000 rpm, or from about 10,000 rpm to about 30,000 rpm. In certain embodiments, the rotational speed of the dispersion blade is about 1,000 rpm, about 5,000 rpm, about 10,000 rpm, about 30,000 rpm, or about 50,000 rpm. In some embodiments, the rotational speed of the dispersion blade is less than about 50,000 rpm, less than about 30,000 rpm, less than about 10,000 rpm, or less than about 5,000 rpm.

In certain embodiments, when the heterogeneous solution is stirred by the at least one blade, a strong transverse shearing force is exerted on the conductive metal part coated by a cathode/anode layer by the sharp edges of the blade. The transverse shearing force leads to fragmentation of conductive metal part coated by a cathode/anode layer into smaller pieces. As a result, finer electrode material detached from the conductive metal part has similar size with the conductive metal part. This makes the isolation of finer electrode material from the heterogeneous mixture by sieving difficult. Significant amount of structural part and conductive part are attached to the finer electrode material.

In some embodiments, plastic beads are added to the heterogeneous mixture. Collisions between beads and electrode plates can enhance detachment of the electrode materials from the electrodes and hence the recovery rate. Therefore, lower stirring speeds can be used for reducing the amount of impurity in the collected finer electrode material while still maintaining the recovery rate. After mechanical agitating the heterogeneous mixture, plastic beads can be filtered so that it does not contaminate the finer electrode material.

In some embodiments, the mass ratio of the plastic bead to chopped battery is from about 1:10 to about 1:100, from about 1:20 to about 1:100, from about 1:40 to about 1:100, from about 1:60 to about 1:100, or from about 1:80 to about 1:100. In certain embodiments, the mass ratio of the plastic bead to chopped battery is about 1:10, about 1:20, about 1:30, about 1:40, about 1:60, about 1:80 or about 1:100. In some embodiments, the diameter of the plastic bead is from about 0.1 mm to about 3 mm, from about 0.1 mm to about 2 mm, from about 0.1 mm to about 1 mm, or from about 0.1 mm to about 0.5 mm. In certain embodiments, the diameter of the plastic bead is about 0.1 mm, about 0.5 mm, about 1 mm, about 2 mm, or about 3 mm. In some embodiments, the diameter of the plastic bead is less than about 3 mm, less than about 2 mm, less than about 1 mm, less than about 0.5 mm, or less than about 0.1 mm.

In certain embodiments, the stirrer is a stirring mixer. In some embodiments, the stirring mixer comprises at least one rod-shaped blade arranged at the centre of the mixer. In certain embodiments, the rotational speed of the stirring mixer is from about 50 rpm to about 3,000 rpm, from about 50 rpm to about 2,000 rpm, from about 50 rpm to about 1,500 rpm, from about 50 rpm to about 1,000 rpm, from about 50 rpm to about 500 rpm, or from about 50 rpm to about 200 rpm. In some embodiments, the rotational speed of the stirring mixer is about 50 rpm, about 100 rpm, about 200 rpm, about 500 rpm, about 1,000 rpm, about 1,500 rpm, about 2,000 rpm, or about 3,000 rpm.

In some embodiments, the stirrer is a planetary stirring mixer. In certain embodiments, the planetary stirring mixer comprises at least one single or double planetary blade with at least one high speed dispersion blade. In certain embodiments, the rotational speed of the high speed dispersion blade is from about 500 rpm to about 2,500 rpm, from about 1,000 rpm to about 3,000 rpm, from about 1,000 rpm to about 2,500 rpm, from about 1,500 rpm to about 2,500 rpm, or from about 2,000 rpm to about 2,500 rpm. In some embodiments, the rotational speed of the planetary blade is from about 20 rpm to about 150 rpm, from about 30 rpm to about 100 rpm, from about 50 rpm to about 300 rpm, from about 50 rpm to about 200 rpm, from about 100 rpm to about 300 rpm, or from about 200 rpm to about 300 rpm.

In certain embodiments, the stirrer is a screw mixer. In some embodiments, the screw is a left-hand screw or a right-hand screw. In certain embodiments, the screw rotates clockwise or anti-clockwise about its vertical axis. In some embodiments, the rotational speed of the screw is from about 100 rpm to about 1,000 rpm, from about 100 rpm to about 800 rpm, from about 100 rpm to about 600 rpm, from about 100 rpm to about 400 rpm, or from about 100 rpm to about 200 rpm.

In some embodiments, the stirrer is a conical screw mixer. In certain embodiments, the conical screw mixer comprises one screw. In other embodiments, the conical screw mixer comprises two screws. In certain embodiments, the conical screw mixer comprises at least one arm extending from the centre to the periphery of the mixer. The screw is extended from the end of the arm and inclined downwards along the periphery of the mixer. The arm can revolve around the vessel of the conical screw mixer and the screw can rotate about itself. In some embodiments, the rotational speed of the arm is about 30 rpm to about 300 rpm, from about 30 rpm to about 250 rpm, from about 30 rpm to about 200 rpm, or from about 50 rpm to about 150 rpm. In certain embodiments, the rotational speed of the screw is from about 100 rpm to about 1,000 rpm, from about 100 rpm to about 800 rpm, from about 100 rpm to about 600 rpm, from about 100 rpm to about 400 rpm, or from about 100 rpm to about 200 rpm.

In some embodiments, the stirring mixer is an air jet mixer. In certain embodiments, air jet is ejected from holes on the wall of the mixer. In some embodiments, the pressure of the air jet is from about 0.01 MPa to about 10 MPa, from about 0.01 MPa to about 1 MPa, or from about 0.1 MPa to about 1 MPa. In certain embodiments, water jet is ejected from holes instead.

Generally, when a dispersion blade mixer is used, a satisfactory recovery rate can be obtained. However, the sharp edges of the blade will cut the materials in the heterogeneous mixture into small pieces. As a result, electrode materials collected are contaminated with impurities, such as conductive metal part.

Using a stirring mixer, a screw mixer, a conical screw mixer, a planetary stirring mixer or an air jet mixer can result in electrode material with lower impurity content compared to a dispersion blade mixer. However, to our surprise, the stirring system using planetary stirring mixer or stirring mixer is not efficient at removing the electrode layers comprising high nickel cathode material such as LiNi_{0.8}Co_{0.15}Al_{0.05}O₂ (NCA) and LiNi_{0.6}Mn_{0.2}Co_{0.2}O₂ (NMC622) from the conductive metal parts. Prolonged stirring does not have a significant effect on improving the efficiency. The combined effect of stirring and ultrasonic agitation also found no improvement. It is suspected that the corrosion of the aluminum current collector arising from high alkalinity of the aqueous cathode slurry gives rise to stronger binding between the cathode electrode layer and aluminum current collector. The shearing force acting upon the materials in the heterogeneous mixture is insufficient in the aforementioned mechanical agitator.

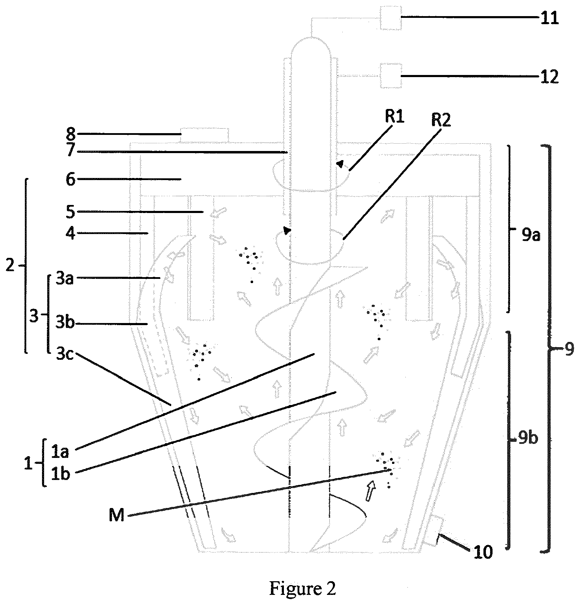

In some embodiments, the stirrer is a high shearing mixer. Figure 2 is a diagram illustrating an embodiment of a high shearing mixer used to stir the heterogeneous mixture. The high shearing mixer comprises a mixing vessel 9 that has an upper part 9a and a lower conically tapering part 9b. In certain embodiments, the upper part 9a is cylindrical or conical. The mixing vessel 9 comprises an inlet 8 at an upper part 9a for introducing small pieces of chopped lithium-ion batteries and an outlet 10 at lower part 9b for discharging the heterogeneous mixture produced in the vessel.

The high shearing mixer shown in Figure 2 comprises a screw 1 arranged vertically at the centre of the mixing vessel 9. The screw 1 comprises a rotary shaft 1a and a spiral blade 1b spirally wound around the rotary shaft 1a of the screw 1. The rotary shaft 1a of the screw 1 is connected to a driving means. In certain embodiments, the driving means is an electric motor 11. In some embodiments, the spiral blade 1b turns around the rotary shaft 1a of the screw 1 anti-clockwise from an axial end of the screw 1. Therefore, by rotating the screw 1 clockwise (in the direction indicated by the arrow R2 in Figure 2), the mixing material M around the screw 1 is urged upward. When the material M is urged upward, it is simultaneously urged centrifugally. As a result, the screw 1 creates an upward and centrifugal flow of material M in its proximity.

In some embodiments, the rotational speed of the screw 1 is from about 500 rpm to about 2,500 rpm, from about 500 rpm to about 2,000 rpm, from about 500 rpm to about 1,500 rpm, from about 1,000 rpm to about 2,500 rpm, or from about 1,000 rpm to about 2,000 rpm. In certain embodiments, the rotational speed of the screw 1 is about 500 rpm, about 1,000 rpm, about 1,500 rpm, about 2,000 rpm or about 2,500 rpm.

The high shearing mixer comprises a rotary unit 2 for urging the mixing material M in the downward and centripetal directions. In some embodiments, the high shearing mixer comprises two or more rotary units 2. The rotary unit 2 comprises a cylindrical rotary shaft 7 of the rotary unit 2 coaxially arranged around the rotary shaft 1a of the screw 1, a pair of rotary arms 6 horizontally extending radially from the rotary shaft 7 of the rotary unit 2, supporting rods 4 vertically extending from the rotary arms 6, agitator vanes 3 held by the supporting rods 4, and rectifier plates 5 attached to the rotary unit 2. The agitator vane 3 comprises an upper portion 3a bent forward relative to the rotation direction of the rotary unit 2 so as to urge the material downwards, a middle portion 3b attached to the supporting rods 4, and an lower portion 3c inclined relative to the radial direction so as to urge the material centripetally. Agitator vanes 3 extend along the inner wall of the mixing vessel 9.

The rectifier plate 5 is arranged between the screw 1 and the agitator vane 3 so as to impart a centripetal motion to the mixing material M. In certain embodiments, the rectifier plate 5 can be replaced with the structure having a supporting rod 4 and an agitator vane 3 to increase shearing friction brought about by the collision of the mixing material M. In some embodiments, the rectifier plate 5 may be omitted. The rotary unit 2 is driven by an electric motor 12.

In some embodiments, the rotational speed of the rotary unit 2 is from about 50 rpm to about 1,000 rpm, from about 50 rpm to about 800 rpm, from about 50 rpm to about 600 rpm, from about 50 rpm to about 500 rpm, or from about 50 rpm to about 300 rpm. In some embodiments, the rotational speed of the rotary unit 2 is about 50 rpm, about 100 rpm, about 250 rpm, about 300 rpm, about 500 rpm, or about 1,000 rpm.

In certain embodiments, the heterogeneous mixture is stirred in the high shearing mixer from about 5 minutes to about 5 hours, from about 5 minutes to about 3 hours, from about 5 minutes to about 2 hours, from about 5 minutes to about 1 hour, from about 5 minutes to about 30 minutes, from about 15 minutes to about 1 hours, from about 30 minutes to about 5 hours, from about 30 minutes to about 2 hours, from about 30 minutes to about 1 hour, from about 1 hour to about 5 hours, or from about 2 hours to about 5 hours. In some embodiments, the heterogeneous mixture is stirred in the high shearing mixer for less than about 2 hours, less than about 1 hour, less than about 30 minutes, less than about 20 minutes, or less than about 10 minutes. In certain embodiments, the heterogeneous mixture is stirred in the high shearing mixer for at least about 10 minutes, at least about 20 minutes, at least about 30 minutes, at least about 1 hour, at least about 2 hours, at least about 3 hours, at least about 4 hours, or at least about 5 hours.

By rotating the screw 1 and the rotary unit 2 in opposite directions, the material in the vessel around the screw 1 is urged upward and outward, and the material around the agitator vane 3 is urged downward and inward. Therefore, the materials thus urged centrifugally and centripetally come into collision with each other at the region between the screw 1 and agitator vane 3 to form a high-pressure region thereat. In this region, the materials are subjected to intense shearing friction. Since the heterogeneous mixture in the mixing vessel 9 can be effectively circulated by convection while causing collisions among the fragments, the cathode electrode layer can be removed from the aluminum current collector in a short time at high efficiency. In addition, since detachment of cathode layer from the conductive metal part originates from shearing friction, the conductive metal part and structural part remain as recognizable pieces without being into fine pieces or particles. As a result, finer electrode materials are obtained with low impurity. Another advantage of the high shearing mixer is that high recovery rate can be obtained in a short processing time, even during scale-up. Any temperature that can process the heterogeneous mixture with mechanical agitation can be used herein. In some embodiments, the binder material is water-based and soluble in cold water. In certain embodiments, the processing temperature is about 14 °C, about 16 °C, about 18 °C, about 20 °C, about 22 °C, about 24 °C, or about 26 °C. In certain embodiments, the mechanical agitation can be performed at room temperature. In some embodiments, the mechanical agitation can be performed at a temperature below 30 °C, below 25 °C, below 22 °C, below 20 °C, below 15 °C, or below 10 °C. After processing the heterogeneous mixture, the cathode and anode layers are separated from the conductive metal parts and particles of the electrode materials are fallen off the electrode layers.

The separation efficiency can be increased by elevated temperatures. In certain embodiments, the mechanical agitation can be performed with heating at a temperature from about 35 °C to about 100 °C, from about 35 °C to about 80 °C, from about 35 °C to about 60 °C, from about 35 °C to about 50 °C, from about 55 °C to about 100 °C, from about 55 °C to about 75 °C, or from about 55 °C to about 65 °C. After heat treatment, due to thermal expansion difference between the cathode and anode layers and the conductive metal parts, the cathode and anode layers may be easily separated from the conductive metal parts. In certain embodiments, the mechanical agitation is performed at room temperature. In other embodiments, the mechanical agitation is performed at a temperature less than 20 °C, less than 25 °C, less than 30 °C, less than 35 °C, less than 40 °C, less than 50 °C, less than 60 °C, less than 70 °C, less than 80 °C, less than 90 °C, or less than 100 °C.

In some embodiments, the binder material is a mixture of water-based and organic-based binder materials. US Patent Publication No. 20130034651 A1 discloses that the organic-based binder material such as PVDF can be used in a water-based slurry for the manufacture of battery electrodes when the slurry comprises a combination of PVDF and other water-based binder materials. It has been found that the method disclosed herein is also applicable to this binder system and the cathode and anode layers can be separated from the conductive metal parts.

However, it is difficult to dissolve pure organic-based binders because of their low solubility in water. In this case, the adhesive strength between the cathode and anode layers and the conductive metal parts remains strong, and therefore the cathode and anode layers are less likely to be separated from the conductive metal parts.

A positive electrode includes a cathode layer supported on a first conductive metal part. Typically, the first conductive metal part is an aluminum or other metallic/conductive foil substrate. The cathode layer contains at least a cathode material and a binder material. The cathode layer may further comprise a conductive agent for enhancing electron conductivity of the cathode layer. The positive electrode may include a significant amount of a binder material such as polymeric binder and the binder material is used to bind the cathode material to the first conductive metal part.

A negative electrode includes an anode layer supported on a second conductive metal part. Typically, the second conductive metal part is a copper or other metallic/conductive foil substrate. The anode layer contains at least an anode material and a binder material. The anode layer may further comprise a conductive agent for enhancing electron conductivity of the anode layer. The negative electrode may include a significant amount of a binder material for binding the anode material to the second conductive metal part.

In certain embodiments, the binder materials in the cathode and anode layers are the same or different. In some embodiments, the binder material is or comprises a water-based binder material, or a mixture of water-based and organic-based binder materials. In certain embodiments, the binder material is not an organic-based binder material or a mixture of water-based binder material and organic-based binder material.

In certain embodiments, the water-based binder material is selected from the group consisting of unsaturated polymer, conjugated diene polymer, styrene-butadiene rubber, acrylated styrene-butadiene rubber, acrylonitrile-butadiene rubber, nitrile butadiene rubber, acrylonitrile-styrene-butadiene copolymer, rubber, acryl rubber, butyl rubber, fluorine rubber, polytetrafluoroethylene, polyolefin, polyethylene, polypropylene, ethylene/propylene copolymers, polybutadiene, polyethylene oxide, chlorosulfonated polyethylene, polyvinylpyrrolidone, polyvinylpyridine, polyvinyl compound, polyvinyl alcohol, polyvinyl acetate, polyepichlorohydrin, polyphosphazene, polyacrylonitrile, polystyrene, latex, acrylic resins, phenolic resins, epoxy resins, cellulose, carboxymethyl cellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, polymethacrylic acid, polymethacrylate, polyacrylamide, polyurethane, halogenated polymer, fluorinated polymer, chlorinated polymer, a salt of alginic acid, and combinations thereof.

Some non-limiting examples of the polyvinyl compound include those that consist of N-vinylamide monomers such as N-vinyl formamide and N-vinyl acetamide or that contain these monomers. The poly-N-vinyl compound is characterized by good wettability. Homopolymers, copolymers, and block copolymers can also be used herein. In some embodiments, the polyvinyl compound is a random, block or alternating interpolymer. In further embodiments, the polyvinyl compound is a di-block, tri-block or other multi-block interpolymer.

Some non-limiting examples of the rubber include natural rubber, isoprene rubber, butadiene rubber, chloroprene rubber, styrene butadiene rubber, and nitrile butadiene rubber. These rubbers contain unsaturated double bonds. In some embodiments, the rubber is a random, block or alternating interpolymer. In further embodiments, the rubber is a di-block, tri-block or other multi-block interpolymer. Unsaturated polymers are generally characterized by good adhesive properties.

In certain embodiments, the salt of alginic acid comprises a cation selected from Na, Li, K, Ca, NH₄, Mg, Al, or a combination thereof.

In some embodiments, the water-based binder material is a monomer containing a carboxylic acid group, a sulfonic acid group, or a combination thereof.

Some non-limiting examples of the monomer having a carboxylic acid group include monocarboxylic acid, dicarboxylic acid, anhydride of dicarboxylic acid, and derivatives thereof. Some non-limiting examples of the monocarboxylic acid include acrylic acid, methacrylic acid, crotonic acid, 2-ethylacrylic acid, and isocrotonic acid. Some non-limiting examples of the dicarboxylic acid include maleic acid, fumaric acid, itaconic acid, and methyl maleic acid. Some non-limiting examples of the anhydride of dicarboxylic acid include maleic anhydride, acrylic anhydride, methyl maleic anhydride, and dimethyl maleic anhydride.

Some non-limiting examples of the monomer having a sulfonic acid group include vinylsulfonic acid, methyl vinylsulfonic acid, (meth)allylsulfonic acid, styrenesulfonic acid, (meth)acrylic acid-2-ethyl sulfonate, 2-acrylamide-2-methylpropanesulfonic acid, 3-allyloxy-2-hydroxypropanesulfonic acid, and 2-(N-acryloyl)amino-2-methyl-1,3-propane-disulfonic acid.

In some embodiments, the organic-based binder material is selected from the group consisting of polytetrafluoroethylene (PTFE), perfluoroalkoxy polymer (PFA), polyvinylidene fluoride (PVDF), copolymer of tetrafluoroethylene (TFE) and hexafluoropropylene (HFP), fluorinated ethylene-propylene (FEP) copolymer, terpolymer of tetrafluoroethylene, hexafluoropropylene and vinylidene fluoride, and combinations thereof. In other embodiments, the organic-based binder material is not polytetrafluoroethylene (PTFE), perfluoroalkoxy polymer (PFA), polyvinylidene fluoride (PVDF), copolymer of tetrafluoroethylene (TFE) and hexafluoropropylene (HFP), fluorinated ethylene-propylene (FEP) copolymer, or terpolymer of tetrafluoroethylene, hexafluoropropylene and vinylidene fluoride.

In certain embodiments, the mass ratio of the water-based binder material to the organic-based binder material in the electrode layer is from about 10:1 to about 1:10, from about 10:1 to about 1:1, from about 10:1 to about 2:1, from about 10:1 to about 4:1, from about 10:1 to about 6:1, or from about 10:1 to about 8:1. In some embodiments, the mass ratio of the water-based binder material to the organic-based material in the electrode layer is about 10:1, about 8:1, about 6:1, about 4:1, about 2:1, or about 1:1.

After dissolution of the binder material, the processed heterogeneous mixture is screened to separate the structural part, first conductive metal part, and second conductive metal part from finer electrode materials comprising cathode and anode materials to provide a suspension comprised of the polar solvent and the finer electrode materials.

In certain embodiments, the finer electrode materials are screened by passing through a sieve having a mesh width between 2 mm and 4 mm. In some embodiments, the finer electrode materials are screened by passing through a sieve having a mesh width between 0.5 mm and 1.0 mm.

In some embodiments, the finer electrode materials further comprise a conductive agent. In this case, the suspension comprises the polar solvent and the finer electrode materials containing the anode and cathode materials and conductive agent.

In certain embodiments, the cathode material is a lithium metal oxide. In further embodiments, the lithium metal oxide is selected from the group consisting of LiNiO₂, Li_{1+z}NiₓMn_{y}O₂, Li_{1+z}NiₓMn_{y}Co_{1-x-y}O₂, Li_{1+z}NiₓCo_{y}Al_{z}O₂, LiV₂O₅, LiTiS₂, LiMoS₂, LiMnO₂, LiCoO₂ (LCO), LiCrO₂, LiMn₂O₄ (LMO), LiFePO₄ (LFP), and combinations thereof, wherein each x is independently from 0.3 to 0.8; each y is independently from 0.1 to 0.45; and each z is independently from 0 to 0.2.

In some embodiments, the lithium metal oxide may include NMC (Li_{i+z}NiₓMn-_{y}Co_{1-x-y}O₂) with various ratios of Ni:Mn:Co, for example, 1:1:1; 5:3:2; 4:4:2; 8:1:1. In certain embodiments, the lithium metal oxide is LiNi_{0.33}Mn_{0.33}Co_{0.33}O₂ (NMC333), LiNi_{0.5}Mn_{0.3}Co_{0.2}O₂ (NMC532), LiNi_{0.6}Mn_{0.2}Co_{0.2}O₂ (NMC622), LiNi_{0.8}Mn_{0.1}Co_{0.1}O₂ (NMC811), LiNi_{0.8}Co_{0.15}Al_{0.05}O₂ (NCA) and combinations thereof. In other embodiments, the lithium metal oxide is not LiNiO₂, Li_{1+z}NiₓMn_{y}O₂, Li_{1+z}NiₓMn_{y}Co_{1-x-y}O₂, Li_{1+z}NiₓCo_{y}Al_{z}O₂, LiV₂O₅, LiTiS₂, LiMoS₂, LiMnO₂, LiCoO₂, LiCrO₂, LiMn₂O₄, or LiFePO₄, wherein each x is independently from 0.3 to 0.8; each y is independently from 0.1 to 0.45; and each z is independently from 0 to 0.2. In certain embodiments, the lithium metal oxide is not LiNi_{0.33}Mn_{0.33}Co_{0.33}O₂ (NMC333), LiNi_{0.5}Mn_{0.3}Co_{0.2}O₂ (NMC532), LiNi_{0.6}Mn_{0.2}Co_{0.2}O₂ (NMC622), LiNi_{0.8}Mn_{0.1}Co_{0.1}O₂ (NMC811), or LiNi_{0.8}Co_{0.15}Al_{0.05}O₂ (NCA).

In certain embodiments, the anode material is selected from the group consisting of natural graphite particulate, synthetic graphite particulate, Sn particulate, Li₄Ti₅O₁₂ particulate, Si particulate, Si-C composite particulate, and combinations thereof.

In some embodiments, the conductive agent is a carbonaceous material. In certain embodiments, the carbonaceous material is soft carbon, hard carbon, coke, graphite, carbon nanotubes, carbon fibers, graphite fibers, carbon nanofibers, graphite nanofibers, carbon black, activated carbon, or a combination thereof.

After the screening step, the finer electrode materials in the suspension are isolated from the polar solvent. The cathode material and the anode material can be recycled simultaneously, thereby simplifying the recycling method. The isolated electrode materials can easily be collected and the recycling rate of the electrode materials is high.

Isolation of the finer electrode materials can be accomplished by a variety of methods known in the art including, but not limited to, filtration, decantation, sedimentation, and centrifugation.

In some embodiments, the finer electrode materials in the suspension may be collected from the polar solvent by filtration. Suitable filtration methods include gravity filtration, pressure filtration, or vacuum filtration.

When the amount of battery fragments in the heterogeneous mixture is large and the time of mechanical agitation is too long (e.g. about 5 hours), it is observed that the delaminated water-based binder material may form a colloid which tends to form flocs when the amount of battery fragments in the heterogeneous mixture is large. In this way, the holes of the sieve tend to quickly become clogged with the colloid. As a result, the sieve becomes partially or fully inoperable. To our surprise, the use of a buffer solution suppresses the formation of the colloid. Therefore, the time required for the relevant process can be shortened and the screening efficiency has been improved.

In some embodiments, the recovery of finer electrode material is at least 80%, at least 85%, at least 90%, or at least 95%. In certain embodiments, the recovery of finer electrode material is about 90%, about 91%, about 92%, about 93%, about 94%, about 95%, about 96%, about 97%, about 98%, or about 99%.

In some embodiments, the percentage of impurity in the recovered finer electrode material is less than 10%, less than 8%, less than 6%, less than 4%, less than 2%, less than 1%, less than 0.5%, less than 0.1%, or less than 0.05%.

Generally, the electrode coating is dried and cured, and then compressed in a calender to increase the density of the electrode coating. Compared to anode electrode layer, the cathode electrode layer has a higher compressed density and hence energy density. Therefore, it is more difficult to separate the cathode electrode layer from the cathode current collector.

The recycling method disclosed herein involves an aqueous-based recycling technology. A high-temperature or strong-acid environment is not necessary and the aqueous processes are particularly environmentally friendly. Furthermore, the method disclosed herein is simple and can be easily scaled up and operated at low cost.

The following examples are presented to exemplify embodiments of the invention but are not intended to limit the invention to the specific embodiments set forth. Unless indicated to the contrary, all parts and percentages are by weight. All numerical values are approximate. When numerical ranges are given, it should be understood that embodiments outside the stated ranges may still fall within the scope of the invention. Specific details described in each example should not be construed as necessary features of the invention.

### EXAMPLES

Impurity of the isolated electrode materials was measured by an inductively coupled plasma mass spectrometer (obtained from PerkinElmer, Inc.).

### Example 1

### Assembling of pouch-type full lithium-ion batteries

### Preparation of positive electrodes

For the positive electrode preparation, 94 wt.% cathode material NMC333 (LNMC TLM 310, obtained from Xinxiang Tianli Energy Co. Ltd., China), 3 wt.% carbon black (SuperP; obtained from Timcal Ltd, Bodio, Switzerland) as a conductive agent, and 3 wt.% polyacrylonitrile (LA 132, Chengdu Indigo Power Sources Co., Ltd., China) as a binder were dispersed in deionized water to form a slurry with a solid content of 50 wt.%. The slurry was then uniformly spread onto aluminum foil as a current collector using a doctor blade coater (obtained from Shenzhen KejingStar Technology Ltd., China; model no. MSK-AFA-III) and dried at 50 °C for 12 hours to obtain a cathode aluminum film.

### Preparation of negative electrodes

For the negative electrode preparation, 90 wt.% of hard carbon (HC; purity of 99.5%, obtained from Ruifute Technology Ltd., Shenzhen, Guangdong, China) with 5 wt.% polyacrylonitrile as a binder and 5 wt.% carbon black as a conductive agent were dispersed in deionized water to form another slurry with a solid content of 50 wt.%. The slurry was then uniformly spread onto copper foil as a current collector using a doctor blade coater and dried at 50 °C for 12 hours to obtain an anode copper film.

### Assembling of pouch-type batteries

After drying, the resulting cathode film and anode film were used to prepare the cathode sheet and anode sheet respectively by cutting into pieces of rectangular shape in the size of 8 cm x 12 cm. Pouch-type batteries were prepared by stacking the cathode and anode sheets in an alternating manner and separated by porous polyethylene separators (Celgard, LLC, US) having a thickness of 25 µm. The electrolyte was a solution of LiPF₆ (1 M) in a mixture of ethylene carbonate (EC), ethyl methyl carbonate (EMC) and dimethyl carbonate (DMC) in a volume ratio of 1:1:1. The cells were assembled in high-purity argon atmosphere with moisture and oxygen content < 1 ppm. After electrolyte filling, the pouch cells were vacuum sealed and then mechanically pressed using a punch tooling with standard shape.

The assembled pouch-type batteries were then subjected to repeated charge and discharge cycles at a constant current rate of 1C between 3.0 V and 4.2 V to mimic the real-life usage patterns. The actual cell capacity was about 5 Ah. The nominal capacity fell below 80% of its initial rated capacity after 800 cycles.

### Recycling of batteries

Used lithium-ion batteries (0.5 kg) were fully discharged by soaking in 6% NaCl solution for 12 hours. After discharging, the lithium-ion batteries were chopped into pieces by a water jet cutting machine (YCWJ-3038-L2015-1D, obtained from YC Industry Co., Ltd., Jiangsu, China). The pieces of the chopped lithium-ion batteries, having an average length from about 1.27 cm to about 2.54 cm were immersed into deionized water (5 L) at 20 °C to form a heterogeneous mixture. The mixture was stirred mechanically by a dispersion blade mixer (10L, obtained from Chienemei Industry Co. Ltd., China) for 1 hour at 20 °C. The rotational speed of the mixing blade is 15,000 rpm. The cathode material was detached from the aluminum foil, while the anode material fell off the copper foil. After stirring, the structural part, copper foil and aluminum foil were removed by passing through a sieve having a mesh width of 4 mm to give a suspension comprised of water and electrode materials. After removal of the structural part, copper foil and aluminum foil, the suspension was filtered to obtain the electrode materials. The recovered electrode materials were dried in an oven for 5 hours at 80 °C under atmospheric pressure and obtained in a yield of 90%. The recycling conditions and formulation of the cathode and anode are shown in Table 1. The recycling results are shown in Table 3.

### Example 2

### Assembling of pouch-type full lithium-ion batteries

Pouch-type lithium-ion batteries were prepared according to Example 1. The assembled pouch-type batteries were then subjected to repeated charge and discharge cycles at a constant current rate of 1C between 3.0 V and 4.2 V to mimic the real-life usage patterns. The actual cell capacity was about 5 Ah. The nominal capacity fell below 80% of its initial rated capacity after 800 cycles.

### Recycling of batteries

Used lithium-ion batteries (∼ 20 kg) were fully discharged by soaking in 6% NaCl solution for 12 hours. After discharging, the lithium-ion batteries were chopped into pieces by a water jet cutting machine (YCWJ-3038-L2015-1D, obtained from YC Industry Co., Ltd., Jiangsu, China). The pieces of the chopped lithium-ion batteries, having an average length from about 1.27 cm to about 2.54 cm were immersed into deionized water (25 L) at 20 °C to form a heterogeneous mixture. The mixture was agitated by an ultrasonic probe (NP2500; obtained from Guangzhou Newpower Ultrasonic Electronic Equipment Co., Ltd., China) with an input power of 200 W for 2 hours at 20 °C. The cathode material was detached from the aluminum foil, while the anode material fell off the copper foil. After ultrasonic processing, the structural part, copper foil and aluminum foil were removed by passing through a sieve having a mesh width of 4 mm to give a suspension comprised of water and electrode materials. After removal of the structural part, copper foil and aluminum foil, the suspension was filtered to obtain the electrode materials. The recovered electrode materials were dried in an oven for 5 hours at 80 °C under atmospheric pressure and obtained in a yield of 63%. The recycling conditions and formulation of the cathode and anode are shown in Table 1. The recycling results are shown in Table 3.

### Example 3

### Assembling of pouch-type full lithium-ion batteries

Pouch-type lithium-ion batteries were prepared according to Example 1. The assembled pouch-type batteries were then subjected to repeated charge and discharge cycles at a constant current rate of 1C between 3.0 V and 4.2 V to mimic the real-life usage patterns. The actual cell capacity was about 5 Ah. The nominal capacity fell below 80% of its initial rated capacity after 800 cycles.

### Recycling of batteries

Used lithium-ion batteries (-20 kg) were fully discharged by soaking in 6% NaCl solution for 12 hours. After discharging, the lithium-ion batteries were chopped into pieces by a water jet cutting machine (YCWJ-3038-L2015-1D, obtained from YC Industry Co., Ltd., Jiangsu, China). The pieces of the chopped lithium-ion batteries, having an average length from about 1.27 cm to about 2.54 cm were immersed into deionized water (25 L) at 20 °C to form a heterogeneous mixture. The mixture was stirred mechanically by a dispersion blade mixer (30L, obtained from Chienemei Industry Co. Ltd., China) for 2 hours at 20 °C. The cathode material was detached from the aluminum foil, while the anode material fell off the copper foil. After stirring, the structural part, copper foil and aluminum foil were removed by passing through a sieve having a mesh width of 4 mm to give a suspension comprised of water and electrode materials. After removal of the structural part, copper foil and aluminum foil, the suspension was filtered to obtain the electrode materials. The recovered electrode materials were dried in an oven for 5 hours at 80 °C under atmospheric pressure and obtained in a yield of 93%. The recycling conditions and formulation of the cathode and anode are shown in Table 1. The recycling results are shown in Table 3.

### Example 4

### Assembling of pouch-type full lithium-ion batteries

### Preparation of positive electrodes

For the positive electrode preparation, 92 wt.% cathode material LMO (LiMn₂O₄ obtained from HuaGuan HengYuan LiTech Co. Ltd., Qingdao, China), 3 wt.% carbon black (SuperP; obtained from Timcal Ltd, Bodio, Switzerland) as a conductive agent, and 1 wt.% carboxymethyl cellulose (CMC, BSH-12, DKS Co. Ltd., Japan), 3 wt.% styrene butadiene rubber (SBR) (AL-2001, NIPPON A&L INC., Japan) and 2 wt.% polyvinylidene fluoride (PVDF; Solef® 5130, obtained from Solvay S.A., Belgium) as a binder were dispersed in N-methyl-2-pyrrolidone (NMP; purity of ≥99%, Sigma-Aldrich, USA) to form a slurry with a solid content of 50 wt.%. The slurry was then uniformly spread onto aluminum foil as a current collector using a doctor blade coater and dried at 50 °C for 12 hours to obtain a cathode aluminum film.

### Preparation of negative electrodes

For the negative electrode preparation, 90 wt.% of hard carbon (HC; purity of 99.5%, obtained from Ruifute Technology Ltd., Shenzhen, Guangdong, China) with 1.5 wt.% CMC (BSH-12, DKS Co. Ltd., Japan) and 3.5 wt.% SBR (AL-2001, NIPPON A&L INC., Japan) as a binder and 5 wt.% carbon black as a conductive agent were dispersed in deionized water to form another slurry with a solid content of 50 wt.%. The slurry was then uniformly spread onto copper foil as a current collector using a doctor blade coater and dried at 50 °C for 12 hours to obtain an anode copper film.

### Assembling of pouch-type batteries

After drying, the resulting cathode film and anode film were used to prepare the cathode sheet and anode sheet respectively by cutting into pieces of rectangular shape in the size of 8 cm x 12 cm. Pouch-type batteries were prepared by stacking the cathode and anode sheets in an alternating manner and separated by porous polyethylene separators (Celgard, LLC, US) having a thickness of 25 µm. The electrolyte was a solution of LiPF₆ (1 M) in a mixture of ethylene carbonate (EC), ethyl methyl carbonate (EMC) and dimethyl carbonate (DMC) in a volume ratio of 1:1:1. The cells were assembled in high-purity argon atmosphere with moisture and oxygen content < 1 ppm. After electrolyte filling, the pouch cells were vacuum sealed and then mechanically pressed using a punch tooling with standard shape.

The assembled pouch-type batteries were then subjected to repeated charge and discharge cycles at a constant current rate of 1C between 3.0 V and 4.3 V to mimic the real-life usage patterns. The actual cell capacity was about 4.2 Ah. The nominal capacity fell below 80% of its initial rated capacity after 1000 cycles.

### Recycling of batteries

Used lithium-ion batteries (0.5 kg) were fully discharged by soaking in 4% NaCl solution for 12 hours. After discharging, the lithium-ion batteries were chopped into pieces by a battery cutting machine (Kaidi Machinery, Zhengzhou, China). The pieces of the chopped lithium-ion batteries, having an average length from about 2.54 cm to about 3.81 cm were immersed into deionized water (10 L) at room temperature to form a heterogeneous mixture. The mixture was agitated ultrasonically in an ultrasonic bath (G-100ST, obtained from Shenzhen Geneng Cleaning Equipment Co. Limited.) at room temperature for 0.5 hour. The cathode material was detached from the aluminum foil, while the anode material fell off the copper foil. After stirring, the structural part, copper foil and aluminum foil were removed by passing through a sieve having a mesh width of 2 mm to give a suspension comprised of water and electrode materials. After removal of the structural part, copper foil and aluminum foil, the suspension was filtered to obtain the electrode materials. The recovered electrode materials were dried in an oven for 5 hours at 80 °C under atmospheric pressure and obtained in a yield of 93%. The recycling conditions and formulation of the cathode and anode are shown in Table 1. The recycling results are shown in Table 3.

### Example 5

### Assembling of pouch-type full lithium-ion batteries

### Preparation of positive electrodes

For the positive electrode preparation, 94 wt.% cathode material LiCoO₂ (LCO) (obtained from Xiamen Tungsten Co. Ltd., China), 3 wt.% carbon black (SuperP; obtained from Timcal Ltd, Bodio, Switzerland) as a conductive agent, and 3 wt.% polyacrylic acid (PAA, #181285, obtained from Sigma-Aldrich, US) as a binder were dispersed in deionized water to form a slurry with a solid content of 50 wt.%. The slurry was then uniformly spread onto aluminum foil as a current collector using a doctor blade coater and dried at 50 °C for 12 hours to obtain a cathode aluminum film.

### Preparation of negative electrodes

For the negative electrode preparation, 90 wt.% of hard carbon (HC; purity of 99.5%, obtained from Ruifute Technology Ltd., Shenzhen, Guangdong, China) with 1.5 wt.% CMC (BSH-12, DKS Co. Ltd., Japan) and 3.5 wt.% SBR (AL-2001, NIPPON A&L INC., Japan) as a binder and 5 wt.% carbon black as a conductive agent were dispersed in deionized water to form another slurry with a solid content of 50 wt.%. The slurry was then uniformly spread onto copper foil as a current collector using a doctor blade coater and dried at 50 °C for 12 hours to obtain an anode copper film.

### Assembling of pouch-type batteries

After drying, the resulting cathode film and anode film were used to prepare the cathode sheet and anode sheet respectively by cutting into pieces of rectangular shape in the size of 8 cm x 12 cm. Pouch-type batteries were prepared by stacking the cathode and anode sheets in an alternating manner and separated by porous polyethylene separators (Celgard, LLC, US) having a thickness of 25 µm. The electrolyte was a solution of LiPF₆ (1 M) in a mixture of ethylene carbonate (EC), ethyl methyl carbonate (EMC) and dimethyl carbonate (DMC) in a volume ratio of 1:1:1. The cells were assembled in high-purity argon atmosphere with moisture and oxygen content < 1 ppm. After electrolyte filling, the pouch cells were vacuum sealed and then mechanically pressed using a punch tooling with standard shape.

The assembled pouch-type batteries were then subjected to repeated charge and discharge cycles at a constant current rate of 1C between 3.0 V and 4.3 V to mimic the real-life usage patterns. The actual cell capacity was about 5.2 Ah. The nominal capacity fell below 80% of its initial rated capacity after 650 cycles.

### Recycling of batteries

Used lithium-ion batteries (0.5 kg) were fully discharged by soaking in 6% NaCl solution for 12 hours. After discharging, the lithium-ion batteries were chopped into pieces by a water jet cutting machine (YCWJ-3038-L2015-1D, obtained from YC Industry Co., Ltd., Jiangsu, China). The pieces of the chopped lithium-ion batteries, having an average length from about 1.27 cm to about 2.54 cm were immersed into deionized water (5 L) at 20 °C to form a heterogeneous mixture. The mixture was stirred mechanically by a dispersion blade mixer (10L, obtained from Chienemei Industry Co. Ltd., China) for 2 hours at 20 °C. The cathode material was detached from the aluminum foil, while the anode material fell off the copper foil. After stirring, the structural part, copper foil and aluminum foil were removed by passing through a sieve having a mesh width of 4 mm to give a suspension comprised of water and electrode materials. After removal of the structural part, copper foil and aluminum foil, the suspension was filtered to obtain the electrode materials. The recovered electrode materials were dried in an oven for 5 hours at 70 °C under atmospheric pressure and obtained in a yield of 90%. The recycling conditions and formulation of the cathode and anode are shown in Table 1. The recycling results are shown in Table 3.

### Example 6

### Assembling of pouch-type full lithium-ion batteries

Pouch-type lithium-ion batteries were prepared according to Example 5. The assembled pouch-type batteries were then subjected to repeated charge and discharge cycles at a constant current rate of 1C between 3.0 V and 4.2 V to mimic the real-life usage patterns. The actual cell capacity was about 5 Ah. The nominal capacity fell below 80% of its initial rated capacity after 700 cycles.

### Recycling of batteries

Used lithium-ion batteries (0.5 kg) were fully discharged by soaking in 6% NaCl solution for 12 hours. After discharging, the lithium-ion batteries were chopped into pieces by a water jet cutting machine (YCWJ-3038-L2015-1D, obtained from YC Industry Co., Ltd., Jiangsu, China). The pieces of the chopped lithium-ion batteries, having an average length from about 1.27 cm to about 2.54 cm were immersed into a 0.05 M phosphate buffer solution (5 L) having a pH value of about pH 6.8 at 20 °C to form a heterogeneous mixture. The phosphate buffer solution was prepared by dissolving 39 g of sodium phosphate monobasic dihydrate (NaH₂PO₄ · 2H₂O, obtained from Sigma-Aldrich, US) in deionized water (5 L). The mixture was stirred mechanically by a dispersion blade mixer (10L, obtained from Chienemei Industry Co. Ltd., China) for 2 hours at 20 °C. The cathode material was detached from the aluminum foil, while the anode material fell off the copper foil. After stirring, the structural part, copper foil and aluminum foil were removed by passing through a sieve having a mesh width of 4 mm to give a suspension comprised of the buffer solution and electrode materials. After removal of the structural part, copper foil and aluminum foil, the suspension was filtered to obtain the electrode materials. The recovered electrode materials were dried in an oven for 5 hours at 80 °C under atmospheric pressure and obtained in a yield of 95%. The recycling conditions and formulation of the cathode and anode are shown in Table 1. The recycling results are shown in Table 3.

### Example 7

### Assembling of pouch-type full lithium-ion batteries

### Preparation of positive electrodes

For the positive electrode preparation, 91 wt.% cathode material LiFePO₄ (LFP) (obtained from Xiamen Tungsten Co. Ltd., China), 5 wt.% carbon black (SuperP; obtained from Timcal Ltd, Bodio, Switzerland) as a conductive agent, and 4 wt.% sodium alginate (SA, #180947, obtained from Sigma-Aldrich, US) as a binder were dispersed in deionized water to form a slurry with a solid content of 50 wt.%. The slurry was then uniformly spread onto aluminum foil as a current collector using a doctor blade coater and dried at 50 °C for 12 hours to obtain a cathode aluminum film.

### Preparation of negative electrodes

For the negative electrode preparation, 90 wt.% of hard carbon (HC; purity of 99.5%, obtained from Ruifute Technology Ltd., Shenzhen, Guangdong, China) with 1.5 wt.% CMC (BSH-12, DKS Co. Ltd., Japan) and 3.5 wt.% SBR (AL-2001, NIPPON A&L INC., Japan) as a binder and 5 wt.% carbon black as a conductive agent were dispersed in deionized water to form another slurry with a solid content of 50 wt.%. The slurry was then uniformly spread onto copper foil as a current collector using a doctor blade coater and dried at 50 °C for 12 hours to obtain an anode copper film.

### Assembling of pouch-type batteries

After drying, the resulting cathode film and anode film were used to prepare the cathode sheet and anode sheet respectively by cutting into pieces of rectangular shape in the size of 8 cm x 12 cm. Pouch-type batteries were prepared by stacking the cathode and anode sheets in an alternating manner and separated by porous polyethylene separators (Celgard, LLC, US) having a thickness of 25 µm. The electrolyte was a solution of LiPF₆ (1 M) in a mixture of ethylene carbonate (EC), ethyl methyl carbonate (EMC) and dimethyl carbonate (DMC) in a volume ratio of 1:1:1. The cells were assembled in high-purity argon atmosphere with moisture and oxygen content < 1 ppm. After electrolyte filling, the pouch cells were vacuum sealed and then mechanically pressed using a punch tooling with standard shape.

The assembled pouch-type batteries were then subjected to repeated charge and discharge cycles at a constant current rate of 1C between 2.5 V and 3.6 V to mimic the real-life usage patterns. The actual cell capacity was about 4 Ah. The nominal capacity fell below 80% of its initial rated capacity after 500 cycles.

### Recycling of batteries

Used lithium-ion batteries (0.5 kg) were fully discharged by soaking in 6% NaCl solution for 12 hours. After discharging, the lithium-ion batteries were chopped into pieces by a water jet cutting machine (YCWJ-3038-L2015-1D, obtained from YC Industry Co., Ltd., Jiangsu, China). The pieces of the chopped lithium-ion batteries, having an average length from about 1.27 cm to about 2.54 cm were immersed into a mixture of deionized water (6.5 L) and ethanol (1.5 L) at 20 °C to form a heterogeneous mixture. The mixture was stirred mechanically by dispersion blade mixer (10L, obtained from Chienemei Industry Co. Ltd., China) for 1 hour at 20 °C. The cathode material was detached from the aluminum foil, while the anode material fell off the copper foil. After stirring, the structural part, copper foil and aluminum foil were removed by passing through a sieve having a mesh width of 4 mm to give a suspension comprised of water and ethanol and electrode materials. After removal of the structural part, copper foil and aluminum foil, the suspension was filtered to obtain the electrode materials. The recovered electrode materials were dried in an oven for 5 hours at 80 °C under atmospheric pressure and obtained in a yield of 91%. The recycling conditions and formulation of the cathode and anode are shown in Table 1. The recycling results are shown in Table 3.

### Example 8

### Assembling of pouch-type full lithium-ion batteries

### Preparation of positive electrodes

For the positive electrode preparation, 94 wt.% cathode material LiNi_{0.33}Mn_{0.33}Co_{0.33}O₂ (NMC333) (obtained from Shenzhen Tianjiao Technology Co. Ltd., China), 3 wt.% carbon black (SuperP; obtained from Timcal Ltd, Bodio, Switzerland) as a conductive agent, and 1.5 wt.% polyacrylic acid (PAA, #181285, obtained from Sigma-Aldrich, US) and 1.5 wt.% polyacrylonitrile (LA 132, Chengdu Indigo Power Sources Co., Ltd., China) as a binder were dispersed in deionized water to form a slurry with a solid content of 50 wt.%. The slurry was then uniformly spread onto aluminum foil as a current collector using a doctor blade coater and dried at 50 °C for 12 hours to obtain a cathode aluminum film.

### Preparation of negative electrodes

For the negative electrode preparation, 90 wt.% of hard carbon (HC; purity of 99.5%, obtained from Ruifute Technology Ltd., China) with 1.5 wt.% CMC (BSH-12, DKS Co. Ltd., Japan) and 3.5 wt.% SBR (AL-2001, NIPPON A&L INC., Japan) as a binder, and 5 wt.% carbon black as a conductive agent were dispersed in deionized water to form another slurry with a solid content of 50 wt.%. The slurry was then uniformly spread onto copper foil as a current collector using a doctor blade coater and dried at 50 °C for 12 hours to obtain an anode copper film.

### Assembling of pouch-type batteries

After drying, the resulting cathode film and anode film were used to prepare the cathode sheet and anode sheet respectively by cutting into pieces of rectangular shape in the size of 8 cm x 12 cm. Pouch-type batteries were prepared by stacking the cathode and anode sheets in an alternating manner and separated by porous polyethylene separators (Celgard, LLC, US) having a thickness of 25 µm. The electrolyte was a solution of LiPF₆ (1 M) in a mixture of ethylene carbonate (EC), ethyl methyl carbonate (EMC) and dimethyl carbonate (DMC) in a volume ratio of 1:1:1. The cells were assembled in high-purity argon atmosphere with moisture and oxygen content < 1 ppm. After electrolyte filling, the pouch cells were vacuum sealed and then mechanically pressed using a punch tooling with standard shape.

The assembled pouch-type batteries were then subjected to repeated charge and discharge cycles at a constant current rate of 1C between 3.0 V and 4.2 V to mimic the real-life usage patterns. The actual cell capacity was about 5.1 Ah. The nominal capacity fell below 80% of its initial rated capacity after 900 cycles.

### Recycling of batteries

Used lithium-ion batteries (0.5 kg) were fully discharged by soaking in 6% NaCl solution for 12 hours. After discharging, the lithium-ion batteries were chopped into pieces by a water jet cutting machine (YCWJ-3038-L2015-1D, obtained from YC Industry Co., Ltd., Jiangsu, China). The pieces of the chopped lithium-ion batteries, having an average length from about 1.27 cm to about 2.54 cm were immersed into a mixture of deionized water (5 L) and acetone (1 L) at 20 °C to form a heterogeneous mixture. The mixture was stirred mechanically by a dispersion blade mixer (10L, obtained from Chienemei Industry Co. Ltd., China) for 1 hour at 20 °C. The cathode material was detached from the aluminum foil, while the anode material fell off the copper foil. After stirring, the structural part, copper foil and aluminum foil were removed by passing through a sieve having a mesh width of 4 mm to give a suspension comprised of water and acetone and electrode materials. After removal of the structural part, copper foil and aluminum foil, the suspension was filtered to obtain the electrode materials. The recovered electrode materials were dried in an oven for 5 hours at 75 °C under atmospheric pressure and obtained in a yield of 92%. The recycling conditions and formulation of the cathode and anode are shown in Table 1. The recycling results are shown in Table 3.

### Example 9

Pouch-type batteries were prepared in the same manner as in Example 1 except that cathode material LiNi_{0.6}Mn_{0.2}Co_{0.2}O₂ (NMC622) (obtained from Hunan Rui Xiang New Material Co., Ltd., Changsha, China) was used instead of NMC333. The assembled pouch-type batteries were then subjected to repeated charge and discharge cycles at a constant current rate of 1C between 3.0 V and 4.2 V to mimic the real-life usage patterns. The actual cell capacity was about 5.5 Ah. The nominal capacity fell below 80% of its initial rated capacity after 1,879 cycles.

Used lithium-ion batteries were recycled in the same manner as in Example 1. The recycling conditions and formulation of the cathode and anode are shown in Table 1. The recycling results are shown in Table 3.

### Example 10

Pouch-type batteries were prepared in the same manner as in Example 1 except that cathode material LiNi_{0.8}Mn_{0.1}Co_{0.1}O₂ (NMC811) (obtained from Henan Kelong NewEnergy Co., Ltd., Xinxiang, China) was used instead of NMC333. The assembled pouch-type batteries were then subjected to repeated charge and discharge cycles at a constant current rate of 1C between 3.0 V and 4.2 V to mimic the real-life usage patterns. The actual cell capacity was about 4.7 Ah. The nominal capacity fell below 80% of its initial rated capacity after 1,270 cycles.

Used lithium-ion batteries were recycled in the same manner as in Example 1. The recycling conditions and formulation of the cathode and anode are shown in Table 1. The recycling results are shown in Table 3.

### Example 11

Pouch-type batteries were prepared in the same manner as in Example 1 except that cathode material LiNi_{0.8}Co_{0.15}Al_{0.05}O₂ (NCA) (obtained from Hunan Rui Xiang New Material Co., Ltd., Changsha, China) was used instead of NMC333. The assembled pouch-type batteries were then subjected to repeated charge and discharge cycles at a constant current rate of 1C between 3.0 V and 4.2 V to mimic the real-life usage patterns. The actual cell capacity was about 4.2 Ah. The nominal capacity fell below 80% of its initial rated capacity after 996 cycles.

Used lithium-ion batteries were recycled in the same manner as in Example 1. The formulation of the cathode, anode and recycling conditions are shown in Table 1. The recycling results are shown in Table 3.

### Example 12

Pouch-type batteries were prepared in the same manner as in Example 1. Used lithium-ion batteries were recycled in the same manner as in Example 1 except that the rotational speed of the mixing blade was 4,000 rpm instead of 15,000 rpm. The recycling conditions and formulation of the cathode and anode are shown in Table 1. The recycling results are shown in Table 3.

### Example 13

Pouch-type batteries were prepared in the same manner as in Example 1. Used lithium-ion batteries were recycled in the same manner as in Example 12 except that the stirring time is 0.16 hour instead of 1 hour. The recycling conditions and formulation of the cathode and anode are shown in Table 1. The recycling results are shown in Table 3.

### Example 14

Pouch-type batteries were prepared in the same manner as in Example 1 except that LCO was used as a cathode material instead of NMC333. The assembled pouch-type batteries were then subjected to repeated charge and discharge cycles at a constant current rate of 1C between 3.0 V and 4.2 V to mimic the real-life usage patterns. The actual cell capacity was about 3 Ah. The nominal capacity fell below 80% of its initial rated capacity after 1,300 cycles.

Used lithium-ion batteries were recycled in the same manner as in Example 3 except that a high shearing mixer was used instead of a dispersion blade mixer and the stirring time was 0.5 hour instead of 2 hours. The rotational speed of the screw and the rotary unit were 2,000 rpm and 250 rpm respectively. The recycling conditions and formulation of the cathode and anode are shown in Table 1. The recycling results are shown in Table 3.

### Example 15

Pouch-type batteries were prepared in the same manner as in Example 1 except that LFP was used as a cathode material instead of NMC333. The assembled pouch-type batteries were then subjected to repeated charge and discharge cycles at a constant current rate of 1C between 3.0 V and 4.2 V to mimic the real-life usage patterns. The actual cell capacity was about 15 Ah. The nominal capacity fell below 80% of its initial rated capacity after 2,100 cycles.

Used lithium-ion batteries were recycled in the same manner as in Example 14. The recycling conditions and formulation of the cathode and anode are shown in Table 1. The recycling results are shown in Table 3.

### Example 16

Pouch-type batteries were prepared in the same manner as in Example 1. Used lithium-ion batteries were recycled in the same manner as in Example 14. The recycling conditions and formulation of the cathode and anode are shown in Table 1. The recycling results are shown in Table 3.

### Examples 17-20

Pouch-type batteries were prepared in the same manner as in Example 1 except that NMC532, NMC622, NMC811 and NCA were used respectively in Examples 17, 18, 19 and 20 instead of NMC333. Used lithium-ion batteries were recycled in the same manner as in Example 14. The recycling conditions and formulation of the cathode and anode are shown in Table 1. The recycling results are shown in Table 3.

### Example 21

Pouch-type batteries were prepared in the same manner as in Example 14. Used lithium-ion batteries were recycled in the same manner as in Example 5 except that a conical screw mixer (obtained from Shuanglong Group Co., Ltd) was used instead of a dispersion blade mixer. The rotational speed of the arm was 150 rpm and the rotational speed of the screw was 300 rpm. The recycling conditions and formulation of the cathode and anode are shown in Table 1. The recycling results are shown in Table 3.

### Example 22

Pouch-type batteries were prepared in the same manner as in Example 15. Used lithium-ion batteries were recycled in the same manner as in Example 21. The recycling conditions and formulation of the cathode and anode are shown in Table 1. The recycling results are shown in Table 3.

### Example 23

Pouch-type batteries were prepared in the same manner as in Example 14. Used lithium-ion batteries were recycled in the same manner as in Example 5 except that a planetary stirring mixer was used instead of a dispersion blade mixer. The rotational speeds of the planetary blade and high speed dispersion blade were 150 rpm and 1,000 rpm respectively. The recycling conditions and formulation of the cathode and anode are shown in Table 1. The recycling results are shown in Table 3.

### Example 24

Pouch-type batteries were prepared in the same manner as in Example 15. Used lithium-ion batteries were recycled in the same manner as in Example 23. The recycling conditions and formulation of the cathode and anode are shown in Table 1. The recycling results are shown in Table 3.

### Example 25

Pouch-type batteries were prepared in the same manner as in Example 14. Used lithium-ion batteries were recycled in the same manner as in Example 5 except an air jet mixer (obtained from ALPA Powder Technology & Equipment Co.,Ltd) was used instead of a dispersion blade mixer. The pressure of the air jet was 0.3 MPa. The recycling conditions and formulation of the cathode and anode are shown in Table 1. The recycling results are shown in Table 3.

### Example 26

Pouch-type batteries were prepared in the same manner as in Example 15. Used lithium-ion batteries were recycled in the same manner as in Example 25. The recycling conditions and formulation of the cathode and anode are shown in Table 1. The recycling results are shown in Table 3.

### Example 27

Pouch-type batteries were prepared in the same manner as in Example 14. Used lithium-ion batteries were recycled in the same manner as in Example 1 except that an additional 30 g of plastic bead having a bead size of 0.5 mm was added to the heterogeneous mixture; the rotational speed the dispersion blade mixer was 4,000 rpm instead of 15,000 rpm; and the stirring time was 0.5 hour instead of 1 hour. The recycling conditions and formulation of the cathode and anode are shown in Table 1. The recycling results are shown in Table 3.

### Example 28

Pouch-type batteries were prepared in the same manner as in Example 1. Used lithium-ion batteries were recycled in the same manner as in Example 27. The recycling conditions and formulation of the cathode and anode are shown in Table 1. The recycling results are shown in Table 3.

### Example 29

Pouch-type batteries were prepared in the same manner as in Example 10. Used lithium-ion batteries were recycled in the same manner as in Example 27. The recycling conditions and formulation of the cathode and anode are shown in Table 1. The recycling results are shown in Table 3.

### Comparative Example 1

Pouch-type batteries were prepared in the same manner as in Example 15. Used lithium-ion batteries were recycled in the same manner as in Example 1 except that the chopped batteries were soaked for 1 hour without stirring. The recycling conditions and formulation of the cathode and anode are shown in Table 1. The recycling results are shown in Table 3.

### Comparative Example 2

Pouch-type batteries were prepared in the same manner as in Example 4. Used lithium-ion batteries were recycled in the same manner as in Example 4 except for using 20 kg of used batteries instead of 0.5 kg and changing the volume of water to 25 L. The recycling conditions and formulation of the cathode and anode are shown in Table 1. The recycling results are shown in Table 3.

### Comparative Example 3

Pouch-type batteries were prepared in the same manner as in Example 1. Used lithium-ion batteries were recycled in the same manner as in Example 4 except that the amount of water used was 5 L instead of 10 L and the heterogeneous mixture was stirred for 2 hours instead of 0.5 hour. The recycling conditions and formulation of the cathode and anode are shown in Table 1. The recycling results are shown in Table 3.

### Comparative Example 4

Pouch-type batteries were prepared in the same manner as in Example 10. Used lithium-ion batteries were recycled in the same manner as in Comparative Example 3. The recycling conditions and formulation of the cathode and anode are shown in Table 1. The recycling results are shown in Table 3.

### Comparative Example 5

Pouch-type batteries were prepared in the same manner as in Example 5. Used lithium-ion batteries were recycled in the same manner as in Example 5 except for using 20 kg of used batteries instead of 0.5 kg; changing the volume of water to 25 L; and agitating the heterogeneous mixture with a stirring mixer and ultrasonic bath instead of a dispersion blade mixer. The stirring speed of the stirring mixer was 500 rpm and the input power of the ultrasonic bath was 200 W. The heterogeneous mixture was simultaneously stirred and subjected to ultrasonication for 20 minutes. The recycling conditions and formulation of the cathode and anode are shown in Table 1. The recycling results are shown in Table 3.

### Comparative Example 6

Pouch-type batteries were prepared in the same manner as in Example 5 except that NMC811 was used a cathode material instead of LCO. Used lithium-ion batteries were recycled in the same manner as in Comparative Example 5 except that the amount of water used was 5 L instead of 25 L and 0.5 kg of used lithium-ion batteries were used instead of 20 kg. The recycling conditions and formulation of the cathode and anode are shown in Table 1. The recycling results are shown in Table 3.

### Comparative Example 7

Pouch-type batteries were prepared in the same manner as in Example 15. Used lithium-ion batteries were recycled in the same manner as in Comparative Example 6 except that the agitation time was 1 hour instead of 20 minutes. The recycling conditions and formulation of the cathode and anode are shown in Table 1. The recycling results are shown in Table 3.

### Comparative Example 8

Pouch-type batteries were prepared in the same manner as in Example 14. Used lithium-ion batteries (0.1 kg) were recycled by using an impact crusher (PLS-550, obtained from Luoyang Dahua Heavy Type Machinery Co., Ltd., China) at a rotational speed of 2,500 rpm for 0.011 hour. The volume of water used was 1L. After stirring, the structural part, copper foil and aluminum foil were removed by passing through a sieve having a mesh width of 4 mm to give a suspension comprised of water and electrode materials. After removal of the structural part, copper foil and aluminum foil, the suspension was filtered to obtain the electrode materials. The recovered electrode materials were dried in an oven for 5 hours at 80 °C under atmospheric pressure. The recycling conditions and formulation of the cathode and anode are shown in Table 1. The recycling results are shown in Table 3.

### Comparative Examples 9-11

Pouch-type batteries of Comparative Examples 9, 10 and 11 were prepared in the same manner as in Examples 15, 1 and 10 respectively. Used lithium-ion batteries of Comparative Examples 9, 10 and 11 were recycled in the same manner as in Comparative Example 8. The recycling conditions and formulations of the cathodes and anodes are shown in Table 1. The recycling results are shown in Table 3.

### Comparative Example 12

Pouch-type batteries were prepared in the same manner as in Example 14. Used lithium-ion batteries were recycled in the same manner as in Example 5 except that a screw mixer (obtained from Shuanglong Group Co., Ltd) was used instead of a dispersion blade mixer. The rotational speed of the screw was 500 rpm. The recycling conditions and formulation of the cathode and anode are shown in Table 1. The recycling results are shown in Table 3.

### Comparative Examples 13, 14 and 15

Pouch-type batteries of Comparative Examples 13, 14 and 15 were prepared in the same manner as in Examples 15, 1 and 10 respectively. Used lithium-ion batteries of Comparative Examples 13, 14 and 15 were recycled in the same manner as in Comparative Example 12. The recycling conditions and formulations of the cathodes and anodes are shown in Table 1. The recycling results are shown in Table 3.

### Comparative Examples 16 and 17

Pouch-type batteries of Comparative Examples 16 and 17 were prepared in the same manner as in Examples 1 and 10 respectively. Used lithium-ion batteries of Comparative Examples 16 and 17 were recycled in the same manner as in Example 21. The recycling conditions and formulations of the cathodes and anodes are shown in Table 1. The recycling results are shown in Table 3.

### Comparative Examples 18 and 19

Pouch-type batteries of Comparative Examples 18 and 19 were prepared in the same manner as in Examples 1 and 10 respectively. Used lithium-ion batteries of Comparative Examples 18 and 19 were recycled in the same manner as in Example 23. The recycling conditions and formulations of the cathodes and anodes are shown in Table 1. The recycling results are shown in Table 3.

### Comparative Examples 20 and 21

Pouch-type batteries of Comparative Examples 20 and 21 were prepared in the same manner as in Examples 1 and 10 respectively. Used lithium-ion batteries of Comparative Examples 20 and 21 were recycled in the same manner as in Example 25. The recycling conditions and formulations of the cathodes and anodes are shown in Table 1. The recycling results are shown in Table 3.

### Reference Example 1

Pouch-type batteries of Reference Example 1 were prepared in the same manner as in Example 1. Used lithium-ion batteries were disassembled and 1 kg of cathode electrodes were isolated. The isolated cathode electrodes were immersed in 5 L of deionized water at 20 °C to form a mixture which was stirred by a high shearing mixer for 0.5 hour. The rotational speed of the rotary unit was 250 rpm and the rotational speed of the screw was 2,000 rpm. The cathode material was detached from the aluminum foil. After stirring, the aluminum foil were removed by passing through a sieve having a mesh width of 4 mm to give a suspension comprised of water and electrode materials. After removal of the aluminum foil, the suspension was filtered to obtain the electrode materials. The recovered electrode materials were dried in an oven for 5 hours at 80 °C under atmospheric pressure. The recycling conditions and formulation of the cathode are shown in Table 2. The recycling results are shown in Table 3.

### Reference Example 2

Pouch-type batteries of Reference Example 2 were prepared in the same manner as in Example 10. Used lithium-ion batteries were disassembled and 1 kg of cathode electrodes were isolated. The isolated cathode electrodes were recycled in the same manner as in Reference Example 1. The recycling conditions and formulation of the cathode are shown in Table 2. The recycling results are shown in Table 3.

### Reference Example 3

Pouch-type batteries of Reference Example 3 were prepared in the same manner as in Example 1. Used lithium-ion batteries were disassembled and 1 kg of cathode electrodes were isolated. The isolated cathode electrode was recycled in the same manner as in Reference Example 1 except that a dispersion blade mixer was used instead of a high shearing mixer. The rotational speed of the mixing blade was 15,000 rpm. The recycling conditions and formulation of the cathode are shown in Table 2. The recycling results are shown in Table 3.

### Reference Example 4

Pouch-type batteries of Reference Example 4 were prepared in the same manner as in Example 1. Used lithium-ion batteries were disassembled and 1 kg of anode electrodes were isolated. The isolated anode electrodes were recycled in the same manner as in Reference Example 1. The recycling conditions and formulation of the anode are shown in Table 2. The recycling results are shown in Table 3.

### Reference Example 5

Pouch-type batteries of Reference Example 5 were prepared in the same manner as in Example 1. Used lithium-ion batteries were disassembled and 1 kg of anode electrodes were isolated. The isolated anode electrodes were recycled in the same manner as in Reference Example 3. The recycling conditions and formulation of the anode are shown in Table 2. The recycling results are shown in Table 3.

**Table 1**

| Example | Chopped battery (kg) | Cathode material | Cathode binder material (wt.%) | Anode binder material (wt.%) | Solvent | Mixing | |
|---|---|---|---|---|---|---|---|
| | | | | | | Apparatus | Time (hrs) |
| Example 1 | 0.5 | NMC333 | PAN (3) | PAN (5) | H₂O (5L) | Dispersion blade mixer | 1 |
| Example 2 | 20 | NMC333 | PAN (3) | PAN (5) | H₂O (25L) | Ultrasonic probe | 2 |
| Example 3 | 20 | NMC333 | PAN (3) | PAN (5) | H₂O (25L) | Dispersion blade mixer | 2 |
| Example 4 | 0.5 | LMO | CMC (1), SBR (3), PVDF (2) | CMC (1.5), SBR (3.5) | H₂O (10L) | Ultrasonic bath | 0.5 |
| Example 5 | 0.5 | LCO | PAA (3) | CMC (1.5), SBR (3.5) | H₂O (5L) | Dispersion blade mixer | 2 |
| Example 6 | 0.5 | LCO | PAA (3) | CMC (1.5), SBR (3.5) | Buffer (5L) | Dispersion blade mixer | 2 |
| Example 7 | 0.5 | LFP | SA (4) | CMC (1.5), SBR (3.5) | H₂O (6.5L), EtOH (1.5L) | Dispersion blade mixer | 1 |
| Example 8 | 0.5 | NMC333 | PAA (1.5), PAN (1.5) | CMC (1.5), SBR (3.5) | H₂O (5L), acetone (1L) | Dispersion blade mixer | 1 |
| Example 9 | 0.5 | NMC622 | PAN (3) | PAN (5) | H₂O (5L) | Dispersion blade mixer | 1 |
| Example 10 | 0.5 | NMC811 | PAN (3) | PAN (5) | H₂O (5L) | Dispersion blade mixer | 1 |
| Example 11 | 0.5 | NCA | PAN (3) | PAN (5) | H₂O (5L) | Dispersion blade mixer | 1 |
| Example 12¹ | 0.5 | NMC333 | PAN (3) | PAN (5) | H₂O (5L) | Dispersion blade mixer | 1 |
| Example 13¹ | 0.5 | NMC333 | PAN (3) | PAN (5) | H₂O (5L) | Dispersion blade mixer | 0.16 |
| Example 14 | 20 | LCO | PAN (3) | PAN (5) | H₂O (25L) | High shearing mixer | 0.5 |
| Example 15 | 20 | LFP | PAN (3) | PAN (5) | H₂O (25L) | High shearing mixer | 0.5 |
| Example 16 | 20 | NMC333 | PAN (3) | PAN (5) | H₂O (25L) | High shearing mixer | 0.5 |
| Example 17 | 20 | NMC532 | PAN (3) | PAN (5) | H₂O (25L) | High shearing mixer | 0.5 |
| Example 18 | 20 | NMC622 | PAN (3) | PAN (5) | H₂O (25L) | High shearing mixer | 0.5 |
| Example 19 | 20 | NMC811 | PAN (3) | PAN (5) | H₂O (25L) | High shearing mixer | 0.5 |
| Example 20 | 20 | NCA | PAN (3) | PAN (5) | H₂O (25L) | High shearing mixer | 0.5 |
| Example 21 | 0.5 | LCO | PAN (3) | PAN (5) | H₂O (5L) | Conical screw mixer | 2 |
| Example 22 | 0.5 | LFP | PAN (3) | PAN (5) | H₂O (5L) | Conical screw mixer | 2 |
| Example 23 | 0.5 | LCO | PAN (3) | PAN (5) | H₂O (5L) | Planetary stirring mixer | 2 |
| Example 24 | 0.5 | LFP | PAN (3) | PAN (5) | H₂O (5L) | Planetary stirring mixer | 2 |
| Example 25 | 0.5 | LCO | PAN (3) | PAN (5) | H₂O (5L) | Air jet mixer | 2 |
| Example 26 | 0.5 | LFP | PAN (3) | PAN (5) | H₂O (5L) | Air jet mixer | 2 |
| Example 27² | 0.5 | LCO | PAN (3) | PAN (5) | H₂O (5L) | Dispersion blade mixer | 0.5 |
| Example 28² | 0.5 | NMC333 | PAN (3) | PAN (5) | H₂O (5L) | Dispersion blade mixer | 0.5 |
| Example 29² | 0.5 | NMC811 | PAN (3) | PAN (5) | H₂O (5L) | Dispersion blade mixer | 0.5 |
| Comparative Example 1³ | 0.5 | LFP | PAN (3) | PAN (5) | H₂O (5L) | / | 1 |
| Comparative Example 2 | 20 | LMO | CMC (1), SBR (3), PVDF (2) | CMC (1.5), SBR (3.5) | H₂O (25L) | Ultrasonic bath | 0.5 |
| Comparative Example 3 | 0.5 | NMC333 | PAN (3) | PAN (5) | H₂O (5L) | Ultrasonic bath | 2 |
| Comparative Example 4 | 0.5 | NMC811 | PAN (3) | PAN (5) | H₂O (5L) | Ultrasonic bath | 2 |
| Comparative Example 5 | 20 | LCO | PAA (3) | CMC (1.5), SBR (3.5) | H₂O (25L) | Stirring mixer, ultrasonic bath | 1/3 |
| Comparative Example 6 | 0.5 | NMC811 | PAA (3) | CMC (1.5), SBR (3.5) | H₂O (5L) | Stirring mixer, ultrasonic bath | 1/3 |
| Comparative Example 7 | 0.5 | LFP | PAN (3) | PAN (5) | H₂O (5L) | Stirring mixer, ultrasonic bath | 1 |
| Comparative Example 8 | 0.1 | LCO | PAN (3) | PAN (5) | H₂O (1L) | Impact crusher | 0.011 |
| Comparative Example 9 | 0.1 | LFP | PAN (3) | PAN (5) | H₂O (1L) | Impact crusher | 0.011 |
| Comparative Example 10 | 0.1 | NMC333 | PAN (3) | PAN (5) | H₂O (1L) | Impact crusher | 0.011 |
| Comparative Example 11 | 0.1 | NMC811 | PAN (3) | PAN (5) | H₂O (1L) | Impact crusher | 0.011 |
| Comparative Example 12 | 0.5 | LCO | PAN (3) | PAN (5) | H₂O (5L) | Screw mixer | 2 |
| Comparative Example 13 | 0.5 | LFP | PAN (3) | PAN (5) | H₂O (5L) | Screw mixer | 2 |
| Comparative Example 14 | 0.5 | NMC333 | PAN (3) | PAN (5) | H₂O (5L) | Screw mixer | 2 |
| Comparative Example 15 | 0.5 | NMC811 | PAN (3) | PAN (5) | H₂O (5L) | Screw mixer | 2 |
| Comparative Example 16 | 0.5 | NMC333 | PAN (3) | PAN (5) | H₂O (5L) | Conical screw mixer | 2 |
| Comparative Example 17 | 0.5 | NMC811 | PAN (3) | PAN (5) | H₂O (5L) | Conical screw mixer | 2 |
| Comparative Example 18 | 0.5 | NMC333 | PAN (3) | PAN (5) | H₂O (5L) | Planetary stirring mixer | 2 |
| Comparative Example 19 | 0.5 | NMC811 | PAN (3) | PAN (5) | H₂O (5L) | Planetary stirring mixer | 2 |
| Comparative Example 20 | 0.5 | NMC333 | PAN (3) | PAN (5) | H₂O (5L) | Air jet mixer | 2 |
| Comparative Example 21 | 0.5 | NMC811 | PAN (3) | PAN (5) | H₂O (5L) | Air jet mixer | 2 |

| | | | | | | | |
|---|---|---|---|---|---|---|---|
| Note: ¹The rotational speed of the dispersion blade mixer was 4,000 rpm. ²The rotational speed of the dispersion blade mixer was 4,000 rpm and plastic beads (30 g) were added to the heterogeneous mixture. ³The chopped batteries were soaked in H₂O for 1 hour without stirring. | | | | | | | |

**Table 2**

| Reference Example | Electrode (kg) | Cathode material | Cathode binder material (wt.%) | Anode material | Anode binder material (wt.%) | Solvent | Mixing Apparatus | Time (hrs) |
|---|---|---|---|---|---|---|---|---|
| Reference Example 1 | 1 | NMC333 | PAN (3) | / | / | H₂O (5L) | High shearing mixer | 0.5 |
| Reference Example 2 | 1 | NMC811 | PAN (3) | / | / | H₂O (5L) | High shearing mixer | 0.5 |
| Reference Example 3 | 1 | NMC333 | PAN (3) | / | / | H₂O (5L) | Dispersion blade mixer | 0.5 |
| Reference Example 4 | 1 | / | / | Carbon | PAN (5) | H₂O (5L) | High shearing mixer | 0.5 |
| Reference Example 5 | 1 | / | / | Carbon | PAN (5) | H₂O (5L) | Dispersion blade mixer | 0.5 |

The yields of the recovered electrode materials are shown in Table 3 below. The methods disclosed herein can improve recovery efficiency of different types of cathode materials. High nickel cathode materials can also be recovered.

**Table 3**

| **Example** | **Recovery (%)** | **Impurity (%)** | **Example** | **Recovery (%)** | **Impurity (%)** |
|---|---|---|---|---|---|
| Example 1 | 90 | 5.7 | Comparative Example 1 | 18 | 0.01 |
| Example 2 | 63 | 0.08 | Comparative Example 2 | 34 | 0.09 |
| Example 3 | 93 | 6.9 | Comparative Example 3 | 45 | 0.05 |
| Example 4 | 93 | 0.09 | Comparative Example 4 | 37 | 0.06 |
| Example 5 | 90 | 6.5 | Comparative Example 5 | 52 | 0.1 |
| Example 6 | 95 | 6.4 | Comparative Example 6 | 40 | 0.1 |
| Example 7 | 91 | 5.6 | Comparative Example 7 | 48 | 0.2 |
| Example 8 | 92 | 5.4 | Comparative Example 8 | 43 | 0.08 |
| Example 9 | 91 | 6.2 | Comparative Example 9 | 41 | 0.07 |
| Example 10 | 90 | 6.8 | Comparative Example 10 | 34 | 0.08 |
| Example 11 | 90 | 6.0 | Comparative Example 11 | 34 | 0.06 |
| Example 12 | 74 | 3.5 | Comparative Example 12 | 42 | 0.03 |
| Example 13 | 62 | 2.1 | Comparative Example 13 | 43 | 0.06 |
| Example 14 | 95 | 0.03 | Comparative Example 14 | 34 | 0.07 |
| Example 15 | 94 | 0.04 | Comparative Example 15 | 33 | 0.05 |
| Example 16 | 97 | 0.02 | Comparative Example 16 | 43 | 0.5 |
| Example 17 | 96 | 0.06 | Comparative Example 17 | 40 | 0.6 |
| Example 18 | 95 | 0.02 | Comparative Example 18 | 45 | 0.4 |
| Example 19 | 95 | 0.01 | Comparative Example 19 | 40 | 0.5 |
| Example 20 | 96 | 0.02 | Comparative Example 20 | 48 | 0.4 |
| Example 21 | 57 | 0.5 | Comparative Example 21 | 42 | 0.4 |
| Example 22 | 58 | 0.6 | Reference Example 1 | 95 | 0.02 |
| Example 23 | 56 | 0.5 | Reference Example 2 | 96 | 0.01 |
| Example 24 | 55 | 0.4 | Reference Example 3 | 91 | 2.6 |
| Example 25 | 52 | 0.3 | Reference Example 4 | 95 | 0.02 |
| Example 26 | 50 | 0.4 | Reference Example 5 | 92 | 2.8 |
| Example 27 | 91 | 1.0 | | | |
| Example 28 | 93 | 1.4 | | | |
| Example 29 | 92 | 1.3 | | | |

While the invention has been described with respect to a limited number of embodiments, the specific features of one embodiment should not be attributed to other embodiments of the invention. In some embodiments, the methods may include numerous steps not mentioned herein. In other embodiments, the methods do not include, or are substantially free of, any steps not enumerated herein. Variations and modifications from the described embodiments exist. The appended claims intend to cover all those modifications and variations as falling within the scope of the invention.

## Claims

1. A method for recycling lithium-ion batteries, comprising the steps of:
a) discharging the lithium-ion batteries;
b) chopping the lithium-ion batteries into pieces to provide a mixture of a structural part, a first conductive metal part coated with a cathode layer, and a second conductive metal part coated with an anode layer;
c) immersing the pieces of the chopped lithium-ion batteries into a polar solvent to form a heterogeneous mixture;
d) processing the heterogeneous mixture with mechanical agitation for a time period from about 30 minutes to about 5 hours to dissolve a binder material in the cathode and anode layers;
e) screening the processed heterogeneous mixture to separate the structural part, first conductive metal part, and second conductive metal part from finer electrode materials comprising cathode and anode materials to provide a suspension comprised of the polar solvent and the finer electrode materials; and
f) isolating the finer electrode materials in the suspension from the polar solvent;
wherein the polar solvent is water, alcohol, ketone or a combination thereof;
wherein the cathode material is a lithium transition metal oxide selected from the group consisting of LiCoO₂, LiNiO₂, LiNiₓMn_{y}O₂, LiNiₓCo_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, LiFePO₄, and combinations thereof; wherein each x is independently from 0.3 to 0.8; each y is independently from 0.1 to 0.45; and each z is independently from 0 to 0.2; and
wherein the binder material in each of the cathode and anode layers is independently a water-based binder material, or a mixture of water-based and organic-based binder materials.

2. The method of claim 1, wherein the cathode material is a nickel-rich cathode material selected from LiNiO₂, LiNiₓMn_{y}O₂, LiNiₓCo_{y}O₂, Li_{1+z}NiₓMn_{y}Co_{1-x-y}O₂, LiNiₓCo_{y}Al_{z}O₂, and combinations thereof; wherein each x is independently from 0.5 to 0.8; each y is independently from 0.1 to 0.4; and each z is independently from 0 to 0.2.

3. The method of claim 2, wherein the nickel-rich cathode material is LiNi_{0.8}Mn_{0.2}O₂, LiNi_{0.6}Mn_{0.4}O₂, LiNi_{0.8}Co_{0.2}O₂, LiNi_{0.6}Co_{0.4}O₂, NMC532, NMC622, NMC811, NCA or a combination thereof.

4. The method of claim 1, wherein the pieces of the chopped lithium-ion batteries have an average length from about 1.27 cm to about 10.16 cm, or of about 0.635 cm or less.

5. The method of claim 1, wherein each of the first and second conductive metal parts is independently selected from the group consisting of an aluminum thin plate, a copper thin plate, a gold thin plate, a silver thin plate, and a platinum thin plate.

6. The method of claim 1, wherein the polar solvent further comprises a salt selected from the group consisting of lithium carbonate, lithium bicarbonate, lithium phosphate, sodium carbonate, sodium bicarbonate, sodium phosphate, potassium carbonate, potassium bicarbonate, potassium phosphate, ammonium carbonate, ammonium bicarbonate, ammonium phosphate, and combinations thereof.

7. The method of claim 6, wherein the polar solvent has a pH from about 6 to about 8.

8. The method of claim 1, wherein the alcohol is selected from methanol, ethanol, isopropanol, n-propanol, t-butanol, or a combination thereof, and wherein a weight ratio of water to the alcohol is from about 5:95 to about 95:5.

9. The method of claim 1, wherein the mechanical agitating step is performed by a stirrer, an ultrasonicator, or a combination thereof, and wherein the stirrer is a high shearing mixer, a planetary stirring mixer, or a stirring mixer, and wherein the ultrasonicator is an ultrasonic bath or an ultrasonic probe.

10. The method of claim 1, wherein the mechanical agitation in step d) is performed at room temperature, and wherein the heterogeneous mixture in step d) is heated at a temperature from about 35 °C to about 100 °C, or from about 55 °C to about 75 °C.

11. The method of claim 1, wherein the water-based binder material is selected from the group consisting of styrene-butadiene rubber, acrylated styrene-butadiene rubber, acrylonitrile-butadiene rubber, nitrile butadiene rubber, acrylonitrile-styrene-butadiene copolymer, polybutadiene, polyvinylpyrrolidone, polyvinylpyridine, polyvinyl alcohol, polyvinyl acetate, polyacrylonitrile, cellulose, carboxymethyl cellulose, hydroxypropyl cellulose, cellulose acetate, cellulose acetate butyrate, cellulose acetate propionate, cyanoethylcellulose, polyacrylic acid, polyacrylate, polymethacrylic acid, polymethacrylate, polyacrylamide, a salt of alginic acid, and combinations thereof

12. The method of claim 1, wherein the organic-based binder material is selected from the group consisting of polytetrafluoroethylene, perfluoroalkoxy polymer, polyvinylidene fluoride, copolymer of tetrafluoroethylene and hexafluoropropylene, fluorinated ethylene-propylene copolymer, terpolymer of tetrafluoroethylene, hexafluoropropylene and vinylidene fluoride, and combinations thereof.

13. The method of claim 1, wherein the finer electrode materials further comprise a conductive agent.

14. The method of claim 1, wherein the finer electrode materials are screened by passing through a sieve having a mesh width between 2 mm and 4 mm, or between 0.5 mm and 1.0 mm.

15. The method of claim 1, wherein isolation of the finer electrode materials is performed by filtration, decanting, settling, centrifugation, or a combination thereof.
